# EUROPEAN PATENT APPLICATION

(11) **EP 4 351 209 A1**
(43) Date of publication of application: **10.04.2024**
(21) Application number: 22827135.9
(22) Date of filing: 12.04.2022
(51) Int. Cl.: H04W 28/24, H04W 76/30

(54) **SESSION MANAGEMENT METHOD AND APPARATUS**

(30) Priority: 23.06.2021 CN 202110697476; 30.07.2021 CN 202110874038
(71) Applicant: Huawei Technologies Co., Ltd., Longgang Shenzhen, Guangdong 518129 (CN)
(72) Inventor: DOU, Fenghui, Shenzhen, Guangdong 518129 (CN); JIN, Hui, Shenzhen, Guangdong 518129 (CN)
(74) Representative: Gill Jennings & Every LLP
(86) International application number: PCT/CN2022/086276
(87) International publication number: WO 2022/267632

(57) **Abstract**

This application provides a session management method and an apparatus. The session management method includes: A terminal device determines a first parameter, where the first parameter is used by a first network device to determine first inactivity duration of a first quality of service QoS flow of the terminal device, or is used by the first network device to determine first inactivity duration of a first session of the terminal device. The terminal device sends a first message to the first network device, where the first message includes the first parameter. Therefore, the first network device determines the first inactivity duration of the first QoS flow of the terminal device, or the first network device determines the first inactivity duration of the first session of the terminal device, so that the first network device releases the first QoS flow in a timely manner based on the first inactivity duration of the first QoS flow, or deactivates a user plane connection of the first session in a timely manner based on the first inactivity duration of the first session, to save network resources.

## Description

This application claims priority to Chinese Patent Application No. 202110697476.5, filed with the China National Intellectual Property Administration on June 23, 2021 and entitled "QOS FLOW MANAGEMENT METHOD", and to Chinese Patent Application No. 202110874038.1, filed with the China National Intellectual Property Administration on July 30, 2021 and entitled "SESSION MANAGEMENT METHOD AND APPARATUS", which are incorporated herein by reference in their entireties.

### TECHNICAL FIELD

Embodiments of this application relate to the communication field, and more specifically, to a session management method and an apparatus.

### BACKGROUND

Currently, there are many types of services such as an extended reality (extended reality, XR) service in a communication system. A core network device usually needs to configure a guaranteed bit rate (guaranteed bit rate, GBR) quality of service (quality of Service, QoS) flow for a terminal to transmit service data, to ensure service experience.

In a communication process, a network resource needs to be ensured for the GBR QoS flow. However, it is difficult for the core network device to perceive service termination, and therefore, the core network device cannot effectively manage the QoS flow, leading to a waste of network resources and adverse impact that a system capacity is difficult to be increased. Therefore, a session management method and an apparatus are required to alleviate the foregoing problem.

### SUMMARY

This application provides a session management method and an apparatus, so that a network device perceives service termination, to improve network resource utilization and save network resources.

According to a first aspect, a session management method is provided. A terminal device determines a first parameter, where the first parameter is used by a first network device to determine first inactivity duration of a first quality of service QoS flow of the terminal device, or is used by the first network device to determine first inactivity duration of a first session of the terminal device. The terminal device sends a first message to the first network device, where the first message includes the first parameter.

The first inactivity duration of the first QoS flow is used to determine to release the first QoS flow; or the first inactivity duration of the first session is used to determine to release a user plane connection of the first session.

The first parameter is first periodicity information of a service of the terminal device; or the first parameter is second inactivity duration of the first QoS flow or second inactivity duration of the first session that is determined based on first periodicity information of a service of the terminal device. The first periodicity information of the service of the terminal device includes at least one of information about a first frame rate of the service or information about a first ratio of frames of high importance to frames of low importance in the service.

Based on the foregoing solution, based on the first periodicity information of the service of the terminal device, the first network device determines the first inactivity duration of the first quality of service QoS flow of the terminal device, or the first network device determines the first inactivity duration of the first session of the terminal device, so that the first network device releases the first QoS flow (a QoS flow for which a bit rate needs to be guaranteed by a network) in a timely manner based on the first inactivity duration of the first QoS flow, or the first network device deactivates the user plane connection of the first session in a timely manner based on the first inactivity duration of the first session, to save network resources.

With reference to the first aspect, in some implementations of the first aspect, the terminal device receives a message that is of the first network device and that includes information about the first inactivity duration of the first QoS flow. When duration in which there is no data transmission on the first QoS flow reaches the first inactivity duration of the first QoS flow, the terminal device releases the first QoS flow; or the terminal device sends, to the first network device, a message indicating that the first QoS flow is inactive and/or requesting to release the first QoS flow. The terminal device receives, from the first network device, a message indicating to release the first QoS flow.

Based on the foregoing solution, the terminal device monitors whether the duration in which there is no data transmission on the first QoS flow reaches the first inactivity duration of the first QoS flow, or releases the first QoS flow based on the message that is sent by the first network device and that indicates to release the first QoS flow, so that the first QoS flow is released in a timely manner, to save network resources.

With reference to the first aspect, in some implementations of the first aspect, the terminal device sends a second message to the first network device. The second message includes a second parameter, and the second parameter is used by the first network device to determine a first QoS parameter of the first QoS flow; or the second message includes a third parameter, and the third parameter is used by the first network device to determine a first QoS parameter of the first QoS flow and a first QoS parameter of a second QoS flow.

In some embodiments, the second parameter or the third parameter is second periodicity information of the service of the terminal device.

In some embodiments, the terminal device determines a second QoS parameter of the first QoS flow, or a second QoS parameter of the first QoS flow and a second QoS parameter of the second QoS flow based on the second periodicity information of the service of the terminal device. The second QoS parameter of the first QoS flow is the second parameter, and information about the second QoS parameter of the first QoS flow and the second QoS parameter of the second QoS flow are the third parameter.

The second periodicity information of the service of the terminal device includes at least one of information about a second frame rate of the service or information about a second ratio of frames of high importance to frames of low importance in the service.

Based on the foregoing solution, the first QoS parameter of the first QoS flow, or the first QoS parameter of the first QoS flow and the first QoS parameter of the second QoS flow are determined based on the second periodicity information of the service of the terminal device, so that a QoS parameter is determined based on a requirement of the service and layered transmission information, to improve network resource utilization.

With reference to the first aspect, in some implementations of the first aspect, the terminal device receives a message that is of the first network device and that includes information about the first inactivity duration of the first session. When duration in which there is no data transmission on the first session reaches the first inactivity duration of the first session, the terminal device deactivates the user plane connection of the first session; or the terminal device sends, to the first network device, a message indicating that the first session is inactive and/or requesting to deactivate the user plane connection of the first session. The terminal device receives, from a second network device, a message indicating to deactivate the user plane connection of the first session.

Based on the foregoing solution, the terminal device deactivates the user plane connection of the first session based on the message that is sent by the second network device and that indicates to deactivate the user plane connection of the first session, so that the user plane connection of the first session is deactivated in a timely manner, to save network resources.

According to a second aspect, a session management method is provided. The session management method includes: A first network device receives a first message from a terminal device, where the first message includes a first parameter, and the first parameter is used by the first network device to determine first inactivity duration of a first quality of service QoS flow of the terminal device, or is used by the first network device to determine first inactivity duration of a first session of the terminal device; and the first network device determines the first inactivity duration of the first QoS flow or the first inactivity duration of the first session based on the first parameter.

The first inactivity duration of the first QoS flow is used to determine to release the first QoS flow; or
the first inactivity duration of the first session is used to determine to release a user plane connection of the first session.

For descriptions of content of the first parameter, refer to related descriptions of content of the first parameter in the first aspect. For brevity, details are not described herein again in this application.

Based on the foregoing solution, the first network device determines the first inactivity duration of the first QoS flow of the terminal device or the first inactivity duration of the first session of the terminal device based on the first parameter that is determined based on first periodicity information of a service of the terminal device, so that the first network device releases the first QoS flow (a QoS flow for which a bit rate needs to be guaranteed by a network) in a timely manner based on the first inactivity duration of the first QoS flow, or the first network device deactivates the user plane connection of the first session in a timely manner based on the first inactivity duration of the first session, to improve network resource utilization.

With reference to the second aspect, in some implementations of the second aspect, the first network device sends, to the terminal device and/or a second network device and/or a third network device, a message including information about the first inactivity duration of the first QoS flow. The first network device receives, from the terminal device and/or the second network device and/or the third network device, a message indicating that the first QoS flow is inactive and/or requesting to release the first QoS flow. The first network device sends, to the terminal device and/or the second network device and/or the third network device, a message indicating to release the first QoS flow.

For beneficial effects of the foregoing solution, refer to related beneficial effects in the first aspect. For brevity, details are not described herein again in this application.

With reference to the second aspect, in some implementations of the second aspect, the first network device receives a second message from the terminal device. The second message includes a second parameter, and the second parameter is used by the first network device to determine a first QoS parameter of the first QoS flow; or the second message includes a third parameter, and the third parameter is used by the first network device to determine a first QoS parameter of the first QoS flow and a first QoS parameter of a second QoS flow.

For descriptions of content of the second parameter and content of the third parameter, refer to related descriptions of content of the second parameter and content of the third parameter in the first aspect. For brevity, details are not described herein again in this application.

For beneficial effects of the foregoing solution, refer to related beneficial effects in the first aspect. For brevity, details are not described herein again in this application.

With reference to the second aspect, in some implementations of the second aspect, the first network device sends, to the terminal device, a message including information about the first inactivity duration of the first session.

With reference to the second aspect, in some implementations of the second aspect, the first network device receives, from the terminal device, a message indicating that the first session is inactive and/or requesting to deactivate the user plane connection of the first session. The first network device sends, to the second network device and/or the third network device, a message indicating to deactivate the user plane connection of the first session.

For beneficial effects of the foregoing solution, refer to related beneficial effects in the first aspect. For brevity, details are not described herein again in this application.

With reference to the second aspect, in some implementations of the second aspect, the second network device receives, from the first network device, the message including the information about the first inactivity duration of the first QoS flow. When duration in which there is no data transmission on the first QoS flow reaches the first inactivity duration of the first QoS flow, the second network device sends, to the first network device, a message indicating that the first QoS flow is inactive and/or requesting to release the first QoS flow. The second network device receives, from the first network device, a message indicating to release the first QoS flow.

For beneficial effects of the foregoing solution, refer to related beneficial effects in the first aspect. For brevity, details are not described herein again in this application.

With reference to the second aspect, in some implementations of the second aspect, the third network device receives, from the first network device, the message including the information about the first inactivity duration of the first QoS flow. When the duration in which there is no data transmission on the first QoS flow reaches the first inactivity duration of the first QoS flow, the third network device sends, to the first network device, the message indicating that the first QoS flow is inactive and/or requesting to release the first QoS flow. The third network device receives, from the first network device, the message indicating to release the first QoS flow.

For beneficial effects of the foregoing solution, refer to related beneficial effects in the first aspect. For brevity, details are not described herein again in this application.

According to a third aspect, a session management method is provided. The session management method includes: A terminal device sends a second message to a first network device, where the second message includes a second parameter, and the second parameter is used by the first network device to determine a first QoS parameter of a first QoS flow; or the second message includes a third parameter, and the third parameter is used by the first network device to determine a first QoS parameter of a first QoS flow and a first QoS parameter of a second QoS flow.

For descriptions of content of the second parameter and content of the third parameter, refer to related descriptions of content of the second parameter and content of the third parameter in the first aspect. For brevity, details are not described herein again in this application.

For beneficial effects of the foregoing solution, refer to related beneficial effects in the first aspect. For brevity, details are not described herein again in this application.

According to a fourth aspect, a session management method is provided. The session management method includes: A first network device receives a second message from a terminal device, where the second message includes a second parameter, and the second parameter is used by the first network device to determine a first QoS parameter of a first QoS flow; or the second message includes a third parameter, and the third parameter is used by the first network device to determine a first QoS parameter of a first QoS flow and a first QoS parameter of a second QoS flow.

For descriptions of content of the second parameter and content of the third parameter, refer to related descriptions of content of the second parameter and content of the third parameter in the first aspect. For brevity, details are not described herein again in this application.

For beneficial effects of the foregoing solution, refer to related beneficial effects in the first aspect. For brevity, details are not described herein again in this application.

According to a fifth aspect, a communication apparatus is provided. The communication apparatus is configured to perform the communication method provided in the first aspect or the third aspect. Specifically, the communication apparatus includes modules configured to perform the communication methods provided in the first aspect to the third aspect.

According to a sixth aspect, a communication apparatus is provided. The communication apparatus is configured to perform the communication method provided in the first aspect or the third aspect. Specifically, the communication apparatus includes a module configured to perform the communication method provided in the second aspect or the fourth aspect.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the third aspect by using a logic circuit or by executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the second aspect or the fourth aspect by using a logic circuit or by executing code instructions.

According to a ninth aspect, a computer-readable storage medium is provided. The computer-readable storage medium stores a computer program or instructions. When the computer program or the instructions are executed, the method according to any one of the possible implementations of the first aspect or the third aspect is implemented.

According to a tenth aspect, a computer-readable storage medium is provided. The computer-readable storage medium stores a computer program or instructions. When the computer program or the instructions are executed, the method according to any one of the possible implementations of the second aspect or the fourth aspect is implemented.

According to an eleventh aspect, a computer program product including instructions is provided. When the instructions are run, the method according to any one of the possible implementations of the first aspect or the third aspect is implemented.

According to a twelfth aspect, a computer program product including instructions is provided. When the instructions are run, the method according to any one of the possible implementations of the second aspect or the fourth aspect is implemented.

According to a thirteenth aspect, a computer program is provided. The computer program includes code or instructions, and when the code or the instructions are run, the method according to any one of the possible implementations of the first aspect or the third aspect is implemented.

According to a fourteenth aspect, a computer program is provided. The computer program includes code or instructions, and when the code or the instructions are run, the method according to any one of the possible implementations of the second aspect or the fourth aspect is implemented.

According to a fifteenth aspect, a chip system is provided. The chip system includes a processor, further includes a memory, and is configured to implement the method according to any one of the possible implementations of the first aspect or the third aspect. The chip system includes a chip, or includes a chip and another discrete device.

According to a sixteenth aspect, a chip system is provided. The chip system includes a processor, further includes a memory, and is configured to implement the method according to any one of the possible implementations of the second aspect or the fourth aspect. The chip system includes a chip, or includes a chip and another discrete device.

According to a seventeenth aspect, a communication system is provided. The communication system includes the apparatuses in the fifth aspect and the sixth aspect.

### BRIEF DESCRIPTION OF DRAWINGS

FIG. 1 is a schematic diagram of a network architecture to which embodiments of this application are applicable;
FIG. 2 is a schematic diagram of a P frame and an I frame applicable to an embodiment;
FIG. 3 is a schematic diagram of QoS flow transmission applicable to an embodiment of this application;
FIG. 4A and FIG. 4B are a schematic diagram of a session management method 400 according to an embodiment of this application;
FIG. 5 is a schematic diagram of a session management method 500 according to an embodiment of this application;
FIG. 6A and FIG. 6B are a schematic diagram of a session management method 600 according to an embodiment of this application;
FIG. 7 is a schematic diagram of a session management method 700 according to an embodiment of this application;
FIG. 8 is a schematic diagram of a method 800 for determining service termination of a terminal device;
FIG. 9A and FIG. 9B are a schematic diagram of a session management method 900 according to an embodiment of this application;
FIG. 10A and FIG. 10B are a schematic diagram of a session management method 1000 according to an embodiment of this application;
FIG. 11 is a schematic block diagram of a communication apparatus 1100 according to an embodiment of this application;
FIG. 12 is a schematic block diagram of a communication apparatus 1200 according to an embodiment of this application;
FIG. 13 is a simplified schematic diagram of a structure of a terminal device 1300 according to an embodiment of this application; and
FIG. 14 is a simplified schematic diagram of a structure of a network device 1400 according to an embodiment of this application.

### DESCRIPTION OF EMBODIMENTS

The following describes the technical solutions in this application with reference to the accompanying drawings.

The technical solutions in embodiments of this application are applicable to various communication systems, for example, a 5^{th} generation (5^{th} generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS), and cloud video source encoding, decoding, rendering, network transmission including core networks and access networks of LTE, NR, and a 6^{th} generation (6^{th} generation, 6G) system air interface, and an extended reality device. Extended reality includes augmented reality (augmented reality, AR), virtual reality (virtual reality, VR), and mixed reality (mixed reality, MR).

The technical solutions in embodiments of this application may be further applied to device-to-device (device-to-device, D2D) communication, machine-to-machine (machine-to-machine, M2M) communication, machine type communication (machine type communication, MTC), and communication in an internet-of-vehicles system. Communication modes in the internet of vehicles system are collectively referred to as V2X (where X represents everything). For example, V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle to network, V2N) communication.

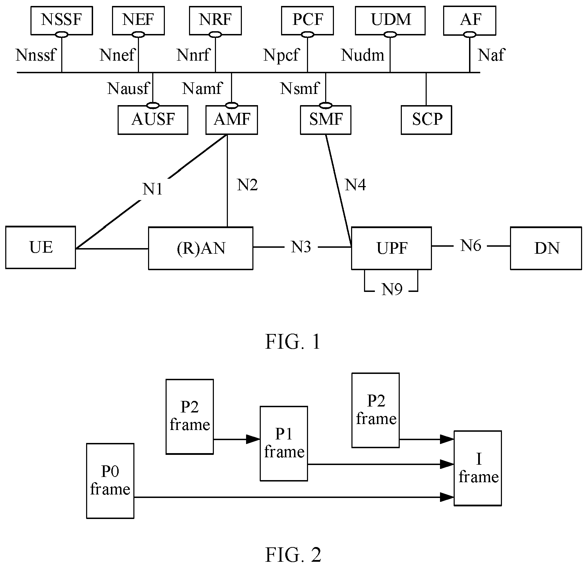

FIG. 1 is a schematic diagram of a network architecture to which embodiments of this application are applicable. The following describes some entities in the network architecture shown in FIG. 1.

### 1. User equipment (user equipment, UE)

The user equipment includes various handheld devices, vehicle-mounted devices, wearable devices, or computing devices having a wireless communication function, or another processing device connected to a wireless modem, and various forms of terminals, mobile stations (mobile stations, MSs), terminals (terminals), or soft terminals, for example, water meters, electric meters, and sensors.

For example, the user equipment in embodiments of this application may be an access terminal, a subscriber unit, a subscriber station, a mobile station, a relay station, a remote station, a remote terminal, a mobile device, a user terminal (user terminal), terminal equipment (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, user equipment in a 5G network, user equipment in a future evolved public land mobile network (public land mobile network, PLMN), user equipment in a future internet of vehicles, or the like. This is not limited in embodiments of this application.

By way of example but not limitation, in embodiments of this application, a wearable device is also referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, or smart jewelry for monitoring physical signs.

In addition, the user equipment in embodiments of this application may alternatively be user equipment in an internet of things (internet of things, IoT) system. An IoT is an important part of development of future information technologies. A main technical feature of the IoT is to connect an object to a network by using a communication technology, to implement an intelligent network of human-machine interconnection and interconnection of things. In embodiments of this application, an IoT technology is used to implement massive connections, deep coverage, and terminal power saving by using, for example, a narrowband (narrowband, NB) technology. In addition, in embodiments of this application, the user equipment may further include sensors such as a smart printer, a train detector, and a gas station. Main functions include collecting data (for some user equipments), receiving control information and downlink data of an access network device, sending an electromagnetic wave, and transmitting uplink data to the access network device.

### 2. (Radio) access network (radio access network, (R)AN) device

The (radio) access network device is configured to provide a network access function for authorized user equipment in a specific area, and use transmission tunnels of different quality based on a level of the user equipment and a service requirement.

A (R)AN manages a radio resource, provides an access service for the user equipment, and forwards a control signal and user equipment data between the user equipment and a core network. The (R)AN is also understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission reception point (transmission and reception point, TRP), or may be a gNB or a transmission point (TRP or TP) in a 5G system such as an NR system, one antenna panel or a group of antenna panels (including a plurality of antenna panels) of a base station in a 5G system, or a network node, for example, a baseband unit (BBU) or a distributed unit (distributed unit, DU), that constitutes a gNB or a transmission point.

In some deployments, the gNB includes a central unit (central unit, CU) and a DU. The gNB further includes an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling is also considered as being sent by the DU or sent by the DU and the AAU. It should be understood that the access network device is a device including one or more of a CU node, a DU node, and an AAU node. In addition, the CU is classified into an access network device in an access network (radio access network, RAN), or the CU may be classified into an access network device in a core network (core network, CN). This is not limited in this application.

### 3. User plane network element

The user plane network element is configured to perform packet routing and forwarding, quality of service (quality of service, QoS) processing of user plane data, and the like.

In a 5G communication system, the user plane network element is a user plane function (user plane function, UPF) network element, and is responsible for user plane path management and data distribution, including UE IP address management, CN tunnel information management, traffic detection, user plane forwarding, and charging.

In a future communication system, the user plane network element is still a UPF network element, or has another name. This is not limited in this application.

### 4. Data network element

The data network element is a network that provides data transmission. In the 5G communication system, the data network element is a data network (data network, DN) element, for example, an operator service, an internet access service, or a third-party service.

In the future communication system, the data network element is still a DN network element, or has another name. This is not limited in this application.

### 5. Access management network element

The access management network element is mainly used for mobility management and access management, and is configured to implement a function other than a session management function in mobility management (mobility management entity, MME) entity functions, for example, a lawful interception function and an access authorization/authentication function.

In the 5G communication system, the access management network element is an access management function (access and mobility management function, AMF) network element, and provides a mobility management function, a lawful interception function, or an access authorization and authentication function.

In the future communication system, the access management network element is still an AMF network element, or has another name. This is not limited in this application.

### 6. Session management network element

The session management network element is mainly configured to: manage a session, allocate and manage an internet protocol (internet protocol, IP) address of a terminal device, select a termination point that can manage a user plane function and a policy control and charging function interface, and notify downlink data.

In the 5G communication system, the session management network element is a session management function (session management function, SMF) network element, and is configured to implement session and bearer management and address allocation. The user plane function network element is configured to perform a user plane data routing and forwarding function, a threshold control function, a traffic monitoring function, and a verification function.

In the future communication system, the session management network element is still an SMF network element, or has another name. This is not limited in this application.

### 7. Policy control network element

The policy control network element is a unified policy framework used to guide network behavior, and provides policy rule information for a control plane function network element (for example, an AMF or SMF network element).

In a 4G communication system, the policy control network element is a policy and charging rules function (policy and charging rules function, PCRF) network element. In the 5G communication system, the policy control network element is a policy control function (policy control function, PCF) network element. In the future communication system, the policy control network element is still a PCF network element, or has another name. This is not limited in this application.

### 8. Authentication server

An authentication server function network element is configured to provide an authentication service, generate a key, implement bidirectional authentication on a terminal device, and support a unified authentication framework.

In the 5G communication system, the authentication server is an authentication server function (authentication server function, AUSF) network element. In the future communication system, the authentication server function network element is still an AUSF network element, or has another name. This is not limited in this application.

### 9. Data management network element

The data management network element is used for terminal device identifier processing, access authentication, registration, and mobility management.

In the 5G communication system, the data management network element is a unified data management (unified data management, UDM) network element. In the future communication system, the unified data management is still a UDM network element, or has another name. This is not limited in this application.

### 10. Application network element

The application network element is configured to perform data routing of application influence, access a network exposure function network element, and interact with a policy framework for policy control.

In the 5G communication system, the application network element is an application function (application function, AF) network element, and is a server end that provides a type of service for a user. Therefore, the application network element may also be referred to as an application server or a service server. The AF may be an AF deployed in an operator network or a third-party AF.

In the future communication system, the application network element is still an AF network element, or has another name. This is not limited in this application.

### 11. Network repository network element

The network repository network element is configured to maintain real-time information of all network function services in a network.

In the 5G communication system, the network repository network element is a network registration function (network repository function, NRF) network element. In the future communication system, the network repository network element is still an NRF network element, or has another name. This is not limited in this application.

It is understood that the foregoing network element or function is not only a network element in a hardware device, but also a software function run on dedicated hardware, or a virtualization function instantiated on a platform (for example, a cloud platform).

For ease of description, in this application, subsequently, the session management network element is an SMF network element, and the access management network element is an AMF network element.

Further, the SMF network element is referred to as an SMF for short, and the AMF network element is referred to as an AMF for short. In other words, an SMF described subsequently in this application may be replaced with the session management network element, and an AMF may be replaced with the access management network element.

For ease of description, in this application, a data transmission method is described by using an example in which an apparatus is an SMF entity or an AMF entity. For an implementation method in which the apparatus is a chip in the SMF entity or a chip in the AMF entity, refer to specific descriptions in which the apparatus is the SMF entity or the AMF entity. Details are not repeated.

In the network architecture shown in FIG. 1, the terminal device is connected to the AMF through an N1 interface, the (R)AN is connected to the AMF through an N2 interface, the RAN is connected to the UPF through an N3 interface, and the UPF is connected to the DN through an N6 interface, and is connected to the SMF through an N4 interface.

It should be noted that names of the network elements and communication interfaces between the network elements in FIG. 1 are briefly described by using an example specified in a current protocol. However, embodiments of this application are not limited to being applied only to a currently known communication system. Therefore, standard names that appear when the current protocol is used as an example for description are all function descriptions. A specific name of a network element, an interface, or signaling is not limited in this application, only represents a function of the network element, the interface, or the signaling, and may be correspondingly extended to another system, for example, a 2G, 3G, 4G, or future communication system.

The network architecture to which embodiments of this application are applied and that is shown in FIG. 1 is merely an example for description, and the network architecture to which embodiments of this application are applicable is not limited thereto. Embodiments of this application are applicable to any network architecture that implements functions of the foregoing network elements.

For example, in some network architectures, both the AMF network element and the SMF network element are referred to as network function (network function, NF) network elements; or in some other network architectures, a set of the AMF network element and the SMF network element is referred to as a control plane function network element.

Currently, an XR service is usually transmitted between a network device and a terminal device in a form of a "frame", and each frame represents a static image. During actual compression, a data capacity is reduced by using an algorithm. For example, an I frame represents a key frame, and only data of the frame is required for completing decoding, so that an image of the frame is completely retained (because the data of the key frame includes a complete image). A P frame represents a difference frame from a previous key frame (for example, an I frame). During decoding, a difference of an image of a current frame needs to be superimposed on a previously buffered image to generate a final image. In an actual transmission process, a size of each frame and a size of an image are related to quality (for example, 1080P or 720P). Usually, each frame needs to be transmitted by using a plurality of IP packets. For example, the I frame needs to be transmitted by using 100 IP packets, and the P frame needs to be transmitted by using 40 IP packets.

Relatively speaking, importance of the I frame is higher than importance of the P frame. When some P frames fail to be transmitted, only display of the P frames is affected, and a user perceives transient frame freezing. However, if the I frame fails to be transmitted, subsequent P frames cannot be parsed, and the user perceives long-lasting frame freezing.

FIG. 2 is a schematic diagram of a P frame and an I frame applicable to an embodiment. As shown in FIG. 1, P0 is a P frame obtained by significantly modifying an I frame, a P1 frame is a frame obtained by slightly modifying the I frame or the P0 frame, and a P2 frame is a frame obtained by slightly modifying a previous frame (the I frame, the P0 frame, or the P1 frame). If the P1 frame or the P2 frame is lost, only display of the P1 frame or the P2 frame is affected, and little impact is caused. If the I frame or the P0 frame is lost, display of a frame after the I frame or the P0 frame is affected, and great impact is caused.

In addition, because an XR service has a data burst characteristic, for example, when the XR service is at 60 frames/s, a frame of data arrives at a base station at an interval of 16.67 ms, that is, a group of IP packets arrive at the base station, and the base station is requested to send the group of IP packets to a terminal device. If the base station cannot send the data, for example, due to network congestion, the base station randomly discards one or more IP data packets in a received group of IP data packets, to relieve congestion. If the randomly discarded IP data packet belongs to data of a high-priority frame, for example, the I frame or the P0 frame, great impact is caused for a user; or if the randomly discarded IP data packet belongs to data of a low-priority frame, for example, the P1 frame or the P2 frame, small impact is caused by a packet loss for a user.

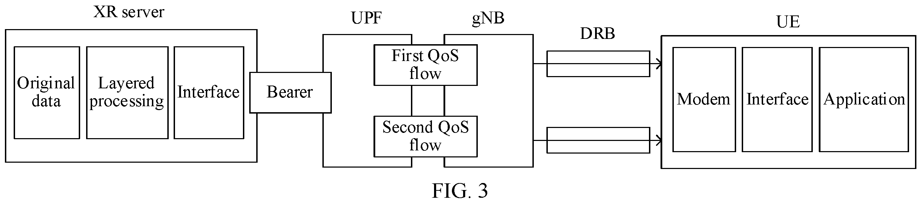

Currently, to resolve impact of a random packet loss of a base station on watching an XR service by a user, an idea of layered transmission is used for improvement. For example, FIG. 3 is a schematic diagram of QoS flow transmission applicable to an embodiment of this application. As shown in FIG. 3, after receiving, from an XR server, data to be sent to UE, a UPF entity sends, based on importance of a data flow, the data flow to the UE by using two quality of service flows (QoS flows). A first QoS flow is used to transmit frames of high importance, for example, an I frame and a P0 frame. A second QoS flow is used to transmit frames of low importance, for example, a P1 frame and a P2 frame.

The QoS flow is a finest granularity of QoS forwarding and processing defined in a 5G communication system. Data mapped to a same QoS flow is subject to same forwarding and processing, for example, a scheduling policy, a queue management policy, and a rate shaping policy. Different QoS forwarding and processing need to be provided for different QoS flows.

In addition, the importance classification of the I frame and the P0 frame and the P1 frame and the P2 frame is merely an example method. This application focuses on classification of service data into two types of data: data of high importance and data of low importance, and is not limited to using this classification method. Any factor related to data importance classification is used to determine importance of data. For example, importance of data is classified by watching data in a visual area and data in a non-view area in a video.

When the base station cannot ensure data transmission, for example, when network congestion occurs, the base station preferentially ensures that high-priority data (data received from the first QoS flow) is sent, and discards low-priority data (data received from the second QoS flow), to ensure service experience of a user.

In the foregoing manner, there is an association relationship between the two QoS flows, and the UPF entity determines, based on importance of a data flow, to perform transmission by using the first QoS flow or the second QoS flow. Usually, to ensure transmission of high-priority data, the first QoS flow needs to be created as a guaranteed bit rate (guaranteed bit rate, GBR) QoS flow, that is, a QoS flow whose bit rate needs to be guaranteed by a network, and the second QoS flow is created as a non-GBR QoS flow, that is, a QoS flow whose bit rate does not need to be guaranteed by the network.

For a service with a specific QoS requirement, the UE or an application server usually needs to request specific QoS from a 3GPP core network device based on the service requirement, and then the core network device configures a corresponding QoS flow.

However, for an XR service, the 3GPP core network device cannot perceive when the service is terminated, and therefore cannot release the GBR QoS flow in a timely manner. Therefore, a waste of network resources may be caused, and this is contrary to an original intention of increasing a system capacity through layered transmission.

In addition, a layered transmission mechanism is not considered when a QoS parameter is configured based on a service requirement. This may cause a problem that a QoS configuration mechanism does not correspond to the layered transmission mechanism. Consequently, resource utilization is low, and a benefit of the layered transmission may be greatly reduced.

In view of this, this application provides a session management method, to determine inactivity duration of a QoS flow, and release a GBR QoS flow in a timely manner. In addition, a QoS parameter is also configured based on a service requirement and layered information to increase a benefit of the layered transmission.

It should be understood that, in the following embodiments, a first QoS flow is a GBR QoS flow, that is, a QoS flow for which a bit rate is guaranteed. If there is a second QoS flow, the second QoS flow is a non-GBR QoS flow, that is, a QoS flow for which a bit rate does not need to be guaranteed by a network.

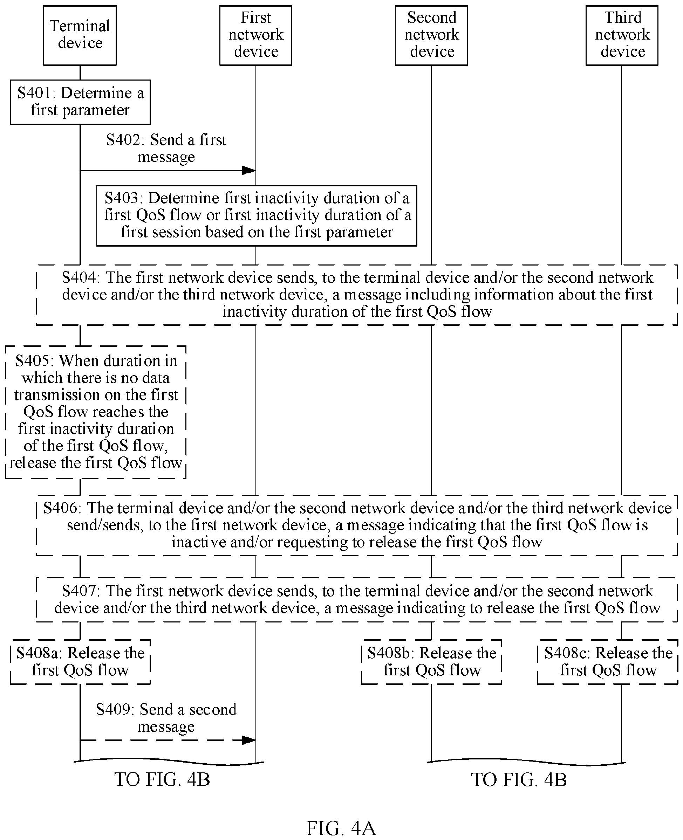

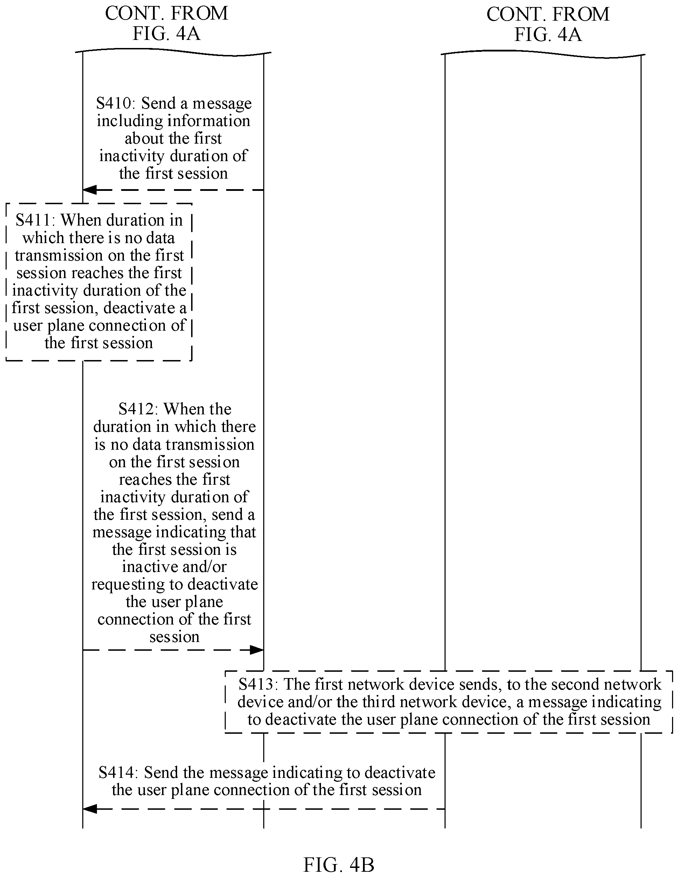

FIG. 4A and FIG. 4B are a schematic diagram of a session management method 400 according to an embodiment of this application. In this embodiment, a first network device is an SMF entity, a second network device is a base station, and a third network device is a UPF entity. As shown in FIG. 4A and FIG. 4B, the method 400 includes the following steps.

S401: A terminal device determines a first parameter.

For example, the terminal device determines the first parameter. The first parameter is used by the first network device to determine first inactivity duration of a first quality of service QoS flow of the terminal device, or is used by the first network device to determine first inactivity duration of a first session of the terminal device.

Specifically, the first inactivity duration of the first QoS flow indicates continuous first duration in which there is no data transmission on the first QoS flow, and the first inactivity duration of the first session indicates continuous first duration in which there is no data transmission on the first session. The first QoS flow or the first session is used to transmit data of a service of the terminal device. Further, the first inactivity duration of the first QoS flow is used to determine to release the first QoS flow, and the first inactivity duration of the first session is used to determine to release a user plane connection of the first session.

In a possible implementation, the first parameter is first periodicity information of the service of the terminal device. The first periodicity information of the service of the terminal device includes at least one of information about a first frame rate of the service or information about a first ratio of frames of high importance to frames of low importance in the service.

For example, the information about the first frame rate is information about a quantity of frames per second, that is, information about a frame rate (frames per second, FPS).

For example, if the first ratio of the frames of high importance to the frames of low importance in the service is 1:7, it indicates that one frame of high importance is followed by seven frames of low importance. In other words, it is understood that one I frame or P0 frame is followed by seven P1 frames or P2 frames.

In another possible implementation, the terminal device determines second inactivity duration of the first QoS flow or second inactivity duration of the first session based on the first periodicity information of the terminal device. The second inactivity duration of the first QoS flow or the second inactivity duration of the first session is the first parameter. The second inactivity duration of the first QoS flow indicates continuous second duration in which there is no data transmission on the first QoS flow, and the second inactivity duration of the first session indicates continuous second duration in which there is no data transmission on the first session.

For example, when the FPS is 60, and no layering is performed (that is, one QoS flow or session is used for data transmission, for example, the first QoS flow or the first session is used for data transmission), the second inactivity duration of the first QoS flow or the second inactivity duration of the first session should be set to be greater than or equal to 16.67 ms (1s/60 = 16.67 ms). When layering is performed (that is, at least two QoS flows or sessions are used for data transmission, for example, the first QoS flow and a second QoS flow or the first session and a second session are used for data transmission, where the first QoS flow or the first session is used to transmit data of high importance in the service, and the second QoS flow or the second session is used to transmit data of low importance in the service), if the first ratio of the frames of high importance to the frames of low importance in the service is 1:7, based on the ratio, one frame of high importance appears in every eight frames, that is, the frame of high importance appears at an interval of 133.36 ms (16.67 * 8 ms = 133.36 ms). Therefore, the second inactivity duration of the first QoS flow or the second inactivity duration of the first session should be greater than or equal to 133.36 ms.

It should be understood that when the first periodicity information of the service of the terminal device changes, the terminal device updates the second inactivity duration of the first QoS flow or the second inactivity duration of the first session based on updated periodicity information of the service.

In addition, an XR server also determines the first parameter. For descriptions of determining the first parameter by the XR server, refer to the foregoing descriptions of determining the first parameter by the terminal device.

S402: The terminal device sends a first message to the first network device. Correspondingly, the first network device receives the first message from the terminal device.

For example, the terminal device sends the first message to the first network device, where the first message includes the first parameter.

Specifically, after determining the first parameter, the terminal device sends, to the first network device, the first message including the first parameter. Further, the first message further carries a QoS requirement of the service and service-related quintuple (packet filter) information of the terminal device. A specific name of the first message is not limited in the present invention, and is a protocol data unit (protocol data unit, PDU) session establishment/modification request message.

It should be noted that the sending, by the terminal device, a first message to the first network device includes: directly sending, by the terminal device, the first message to the first network device, and sending, by the terminal, the first message to the first network device via an intermediate network element such as an access network device or another core network device. For example, the terminal first sends the first message to the access network device, namely, a base station, the base station then sends the first message to the core network device, namely, an AMF, and finally the AMF sends the first message to the first network device.

It should be understood that if the terminal device updates the second inactivity duration of the first QoS flow or the second inactivity duration of the first session based on the updated periodicity information of the service, the terminal device sends updated second inactivity duration of the first QoS flow or updated second inactivity duration of the first session to the first network device in a timely manner.

In addition, if the XR server determines the first parameter in S401, this step is that the XR server sends the first parameter to the first network device. Correspondingly, the first network device receives the first parameter from the XR server.

It should be noted that the sending, by the XR server, the first parameter to the first network device includes: directly sending the first parameter to the first network device, and sending the first parameter to the first network device via another intermediate network element. For example, the XR server sends, to a PCF entity, a message including the first parameter, and then the PCF entity initiates a modification procedure related to an SM policy. It should be noted that, when the XR server sends, to the PCF entity, the message including the first parameter, the XR server directly sends the message to the PCF entity, or may send the message to the PCF entity via an NEF entity.

Specifically, the XR server includes the first parameter, the QoS requirement, and the service-related quintuple (packet filter) information of the terminal device in the message to be sent to the PCF entity. The PCF entity invokes a service to send the first parameter, the QoS requirement, and a service-related quintuple (packet filter) parameter of the terminal device to the first network device (the SMF entity). The service invoked by the PCF entity is Npcf_SMPolicyControl_UpdateNotify.

S403: The first network device determines the first inactivity duration of the first QoS flow or the first inactivity duration of the first session based on the first parameter.

For example, the first network device determines the first inactivity duration of the first QoS flow or the first inactivity duration of the first session based on the first parameter.

In a possible implementation, the first network device determines the first inactivity duration of the first QoS flow based on the second inactivity duration of the first QoS flow and with reference to a network policy factor (for example, a network quality (jitter) factor or a network load factor). Further, a value of the first inactivity duration of the first QoS flow should be greater than or equal to a value of the second inactivity duration of the first QoS flow.

In another possible implementation, the first network device determines the first inactivity duration of the first session based on the second inactivity duration of the first session and with reference to a network policy factor (for example, a network quality (jitter) factor or a network load factor). Further, a value of the first inactivity duration of the first session should be greater than or equal to a value of the second inactivity duration of the first session.

In another possible implementation, the first network device determines the first inactivity duration of the first QoS flow or the first inactivity duration of the first session based on the first periodicity information of the service of the terminal device.

Specifically, for descriptions of determining, by the first network device, the first inactivity duration of the first QoS flow or the first inactivity duration of the first session based on the first periodicity information of the service of the terminal device, refer to the network policy factor and the foregoing descriptions of determining, by the terminal device, the second inactivity duration of the first QoS flow or the second inactivity duration of the first session based on the first periodicity information of the terminal device in S401. For brevity, details are not described herein again in this application.

S404a: The first network device sends, to the terminal device, a message including information about the first inactivity duration of the first QoS flow. Correspondingly, the terminal device receives, from the first network device, the message including the information about the first inactivity duration of the first QoS flow.

In some embodiments, the first network device sends, to the terminal device, the message including the information about the first inactivity duration of the first QoS flow, so that the terminal device monitors whether continuous duration in which there is no data transmission on the first QoS flow reaches the first inactivity duration of the first QoS flow.

S404b: The first network device sends, to the second network device, the message including the information about the first inactivity duration of the first QoS flow. Correspondingly, the second network device receives, from the first network device, the message that includes the information about the first inactivity duration of the first QoS flow.

In some embodiments, the first network device sends, to the second network device, the message including the information about the first inactivity duration of the first QoS flow, so that the second network device monitors whether the continuous duration in which there is no data transmission on the first QoS flow reaches the first inactivity duration of the first QoS flow.

It should be understood that an execution sequence of S404a and S404b is not specifically limited. Either or both of S404a and S404b may be performed. This is not limited in this application.

S405: When the duration in which there is no data transmission on the first QoS flow reaches the first inactivity duration of the first QoS flow, the terminal device releases the first QoS flow.

In some embodiments, the terminal device monitors, based on the first inactivity duration of the first QoS flow, the continuous duration in which there is no data transmission on the first QoS flow, and releases the first QoS flow when the duration in which there is no data transmission on the first QoS flow reaches the first inactivity duration of the first QoS flow.

In a possible implementation, the first QoS flow is associated with the second QoS flow, and the terminal device deletes an association relationship between the first QoS flow and the second QoS flow, or releases the second QoS flow associated with the first QoS flow. Both the first QoS flow and the second QoS flow are used to transmit data of the service of the terminal device, the first QoS flow is used to transmit the data of high importance in the service, and the second QoS flow is used to transmit the data of low importance in the service.

In another possible implementation, the first QoS flow is associated with no QoS flow, and the terminal device directly releases the first QoS flow.

S406: The terminal device and/or the second network device and/or the third network device send/sends, to the first network device, a message indicating that the first QoS flow is inactive and/or requesting to release the first QoS flow. Correspondingly, the first network device receives, from the terminal device and/or the second network device and/or the third network device, the message indicating that the first QoS flow is inactive and/or requesting to release the first QoS flow.

In some embodiments, the terminal device and/or the second network device and/or the third network device monitor/monitors, based on the first inactivity duration of the first QoS flow, the continuous duration in which there is no data transmission on the first QoS flow, and when the duration in which there is no data transmission on the first QoS flow reaches the first inactivity duration of the first QoS flow, send/sends, to the first network device, the message indicating that the first QoS flow is inactive and/or requesting to release the first QoS flow. The message is a report message indicating that the duration in which there is no data transmission on the first QoS flow reaches the first inactivity duration of the first QoS flow, and may further include QoS flow identifier (QFI) information of the first QoS flow, in other words, indicate that the first QoS flow meets a reporting condition.

For example, the third network device sends, to the first network device in a form of an N4 report (N4 report) message, the message indicating that the first QoS flow is inactive and/or requesting to release the first QoS flow.

S407: The first network device sends, to the terminal device and/or the second network device and/or the third network device, a message indicating to release the first QoS flow. Correspondingly, the terminal device and/or the second network device and/or the third network device receive/receives, from the first network device, the message indicating to release the first QoS flow.

For example, after receiving the message indicating that the first QoS flow is inactive and/or requesting to release the first QoS flow, the first network device sends, to the terminal device and/or the second network device and/or the third network device, the message indicating to release the first QoS flow.

Specifically, the first network device determines, based on the message indicating that the first QoS flow is inactive and/or requesting to release the first QoS flow, whether the to-be-released first QoS flow is associated with a QoS flow, and sends, to the terminal device and/or the second network device and/or the third network device, the message indicating to release the first QoS flow.

For example, the first network device sends, in a form of sending a protocol data unit (protocol data unit, PDU) session modification (PDU Session modification) message to the terminal device, the message indicating to release the first QoS flow, and/or the first network device sends, in a form of sending an N4 session modification (N4 session modification) message to the third network device, the message indicating to release the first QoS flow.

For descriptions of how to release the first QoS flow in two cases in which the first QoS flow is associated with a QoS flow (namely, the second QoS flow) and the first QoS flow is associated with no QoS flow, refer to the foregoing descriptions of S405. For brevity, details are not described herein again in this application.

S408a: The terminal device releases the first QoS flow.

In some embodiments, after receiving the message that is sent by the first network device and that indicates to release the first QoS flow, the terminal device releases the first QoS flow. Specifically, for descriptions of how to release the first QoS flow in the two cases in which the first QoS flow is associated with a QoS flow (namely, the second QoS flow) and the first QoS flow is associated with no QoS flow, refer to related descriptions of S405. For brevity, details are not described herein again in this application.

S408b: The second network device releases the first QoS flow.

In some embodiments, after receiving the message that is sent by the first network device and that indicates to release the first QoS flow, the second network device releases the first QoS flow. Specifically, for descriptions of how to release the first QoS flow in the two cases in which the first QoS flow is associated with a QoS flow (namely, the second QoS flow) and the first QoS flow is associated with no QoS flow, refer to related descriptions of S405. For brevity, details are not described herein again in this application.

S408c: The third network device releases the first QoS flow.

In some embodiments, after receiving the message that is sent by the first network device and that indicates to release the first QoS flow, the third network device releases the first QoS flow. Specifically, for descriptions of how to release the first QoS flow in the two cases in which the first QoS flow is associated with a QoS flow (namely, the second QoS flow) and the first QoS flow is associated with no QoS flow, refer to related descriptions of S405. For brevity, details are not described herein again in this application.

The releasing the first QoS flow includes QoS flow context information (mainly including a QoS profile (a QFI and a corresponding QoS parameter)) on a second network device side.

It should be understood that, in the foregoing solution, if S405 is performed, steps related to message exchange between the first network device and the terminal device in S406 and S407, and S408a are not performed; or if S405 is not performed, steps related to message exchange between the first network device and the terminal device in S406 and S407, and S408a are performed.

S409: The terminal device sends a second message to the first network device. Correspondingly, the first network device receives the second message from the terminal device.

In some embodiments, the terminal device sends the second message to the first network, where the second message includes a second parameter or a third parameter. The second parameter is used by the first network device to determine a first QoS parameter of the first QoS flow, the third parameter is used by the first network device to determine the first QoS parameter of the first QoS flow and a first QoS parameter of the second QoS flow, the first QoS parameter of the first QoS flow includes at least one of a first guaranteed flow bit rate (Guaranteed flow bit rate, GFBR), a first maximum flow bit rate (maximum flow bit rate, MFBR), or a first maximum data burst size (maximum data burst volume, MDBV) of the first QoS flow, and the first QoS parameter of the second QoS flow includes at least one of a first GFBR, a first MFBR, or a first MDBV of the second QoS flow.

In a possible implementation, the second parameter and the third parameter are second periodicity information of the service of the terminal device.

In another possible implementation, the second parameter is the second QoS parameter of the first QoS flow that is determined by the terminal device based on the second periodicity information of the service of the terminal device and layered transmission information of the service, and the third parameter is the second QoS parameter of the first QoS flow and the second QoS parameter of the second QoS flow that are determined by the terminal device based on the second periodicity information of the service of the terminal device and the layered transmission information. The second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow. A GFBR is a guaranteed rate provided by the first network device for a QoS flow, and an MFBR is a limitation on a highest bit rate provided by the first network device for the QoS flow.

The second periodicity information of the service of the terminal device includes at least one of information about a second frame rate of the service or information about a second ratio of frames of high importance to frames of low importance in the service.

For example, the terminal device determines the second GFBR of the first QoS flow based on GFBR requirement information of the service, the information about the second frame rate (FPS), a ratio r1 of a quantity of frames of high importance (that is, the quantity of frames of high importance/(the quantity of frames of high importance degree + a quantity of frames of low importance)), and a frame size ratio r2.

Specifically, the second GFBR of the first QoS flow = the second FPS * r1 * a size of the frame of high importance, and the size of the frame of high importance = r2 * a GFBR requirement of the service/(r2 * the FPS * r1 + FPS(1 - r1)).

For example, the second MDBV of the first QoS flow = a peak-to-average ratio of the first QoS flow * the second GFBR of the first QoS flow * a PDB = (1/r1) * the second GFBR of the first QoS flow * the PDB. The PDB is a packet delay budget (packet delay budget).

For example, the second MDBV of the first QoS flow is determined based on a length of the PDB and the size of the frame of high importance.

In some embodiments, if the PDB < 1000/Fps, the second MDBV of the first QoS flow = the size of the frame of high importance * the PDB/(1000/Fps).

In some embodiments, if 1000/Fps ≤ the PDB ≤ n * a frame configuration periodicity, the second MDBV of the first QoS flow = n * the size of the frame of high importance.

In some embodiments, if n * a frame configuration periodicity ≤ the PDB ≤ n * the frame configuration periodicity * 1000/Fps, the second MDBV of the first QoS flow = n * the size of the frame of high importance + the size of the frame of high importance * (the PDB - n * the frame configuration periodicity)/(1000/Fps).

The frame configuration periodicity is determined based on a configuration of a frame of high importance and a frame of low importance, and n is an integer greater than or equal to 1.

For example, the second GFBR of the second QoS flow = the GFBR requirement of the service - the second GFBR of the first QoS flow.

In addition, after receiving the second message from the first terminal device, the first network device determines the first QoS parameter of the first QoS flow, or the first QoS parameter of the first QoS flow and the first QoS parameter of the second QoS flow based on the second message.

In a possible implementation, the second message includes the second parameter, and the first network device determines the first QoS parameter of the first QoS flow based on the second parameter.

In some embodiments, when the second parameter is the second periodicity information of the service of the terminal device, the first network device determines the first QoS parameter of the first QoS flow based on the second periodicity information of the service of the terminal device and the layered transmission information of the service.

Specifically, for descriptions of determining the first QoS parameter of the first QoS flow based on the second periodicity information of the service of the terminal device and the layered transmission information of the service, refer to the foregoing descriptions of determining, by the terminal device, the second QoS parameter of the first QoS flow based on the second periodicity information of the service of the terminal device and the layered transmission information of the service. For brevity, details are not described herein again in this application.

In some embodiments, when the second parameter is the second QoS parameter of the first QoS flow, the first network device determines the first QoS parameter of the first QoS flow based on the second QoS parameter of the first QoS flow.

In another possible implementation, the second message includes the third parameter, and the first network device determines the first QoS parameter of the first QoS flow and the first QoS parameter of the second QoS flow based on the second message.

In some embodiments, when the third parameter is the second periodicity information of the service of the terminal device, the first network device determines the first QoS parameter of the first QoS flow and the first QoS parameter of the second QoS flow based on the second periodicity information of the service of the terminal device and the layered transmission information of the service.

Specifically, for descriptions of determining the first QoS parameter of the first QoS flow and the first QoS parameter of the second QoS flow based on the second periodicity information of the service of the terminal device and the layered transmission information of the service, refer to the foregoing descriptions of determining, by the terminal device, the second QoS parameter of the first QoS flow and the second QoS parameter of the second QoS flow based on the second periodicity information of the service of the terminal device and the layered transmission information of the service. For brevity, details are not described herein again in this application.

In some embodiments, when the third parameter is the second QoS parameter of the first QoS flow and the second QoS parameter of the second QoS flow, the first network device determines the first QoS parameter of the first QoS flow and the first QoS parameter of the second QoS flow based on the second QoS parameter of the first QoS flow and the second QoS parameter of the second QoS flow.

It should be understood that the first network device further determines a use mechanism of a QoS flow based on the second message. To be specific, the second QoS flow is used to transmit only data of an (XR) service of the terminal device, or the second QoS flow is used to transmit both data of an (XR) service of the terminal device and data of another service.

S410: The first network device sends, to the terminal device, a message including information about the first inactivity duration of the first session. Correspondingly, the terminal device receives, from the first network device, the message including the information about the first inactivity duration of the first session.

In some embodiments, the first network device sends, to the terminal device, the message including the information about the first inactivity duration of the first session, so that the terminal device monitors whether continuous duration in which there is no data transmission on the first session reaches the first inactivity duration of the first session. S411: When the duration in which there is no data transmission on the first session reaches the first inactivity duration of the first session, the terminal device deactivates the user plane connection of the first session.

In some embodiments, the terminal device monitors, based on the first inactivity duration of the first session, the continuous duration in which there is no data transmission on the first session, and when the duration in which there is no data transmission on the first session reaches the first inactivity duration of the first session, the terminal device deactivates the user plane connection of the first session.

Specifically, the deactivating the user plane connection of the first session means releasing a radio bearer between the terminal device and the second network device (the base station) and a user plane connection between the second network device (the base station) and the third network device (the UPF entity) that correspond to the first session. The terminal device deactivates the user plane connection of the first session by releasing the radio bearer corresponding to the first session.

In addition, the second network device (the base station) and the third network device (the UPF entity) perform the following operation to deactivate the user plane connection of the first session:
The second network device (the base station) releases tunnel info of a UPF entity end corresponding to the first session, where the tunnel info includes an IP address and a tunnel port number of the UPF entity, and releases the radio bearer corresponding to the first session.

The third network device (the UPF entity) releases tunnel info of an AN end corresponding to the first session, where the tunnel info includes an IP address and a tunnel port number of the base station.

It should be understood that the releasing the user plane connection of the first session means releasing user plane connections corresponding to all QoS flows included in the first session, because the tunnel info and a PDU session configured for the radio bearer are both configured at a granularity of a QoS flow.

S412: When the duration in which there is no data transmission on the first session reaches the first inactivity duration of the first session, the terminal device sends, to the first network device, a message indicating that the first session is inactive and/or requesting to deactivate the user plane connection of the first session. Correspondingly, the first network device receives, from the terminal device, the message indicating that the first session is inactive and/or requesting to deactivate the user plane connection of the first session.

In some embodiments, the terminal device monitors, based on the first inactivity duration of the first session, the continuous duration in which there is no data transmission on the first session, and when the duration in which there is no data transmission on the first session reaches the first inactivity duration of the first session, the terminal device sends, to the first network device, the message indicating that the first session is inactive and/or requesting to deactivate the user plane connection of the first session. The message is a report message indicating that the duration in which there is no data transmission on the first session reaches the first inactivity duration of the first session, in other words, indicates that the first session meets a reporting condition.

The deactivating the user plane connection of the first session means releasing a radio bearer between the terminal device and the base station and a user plane connection between the base station and the UPF entity that correspond to the first session.

S413: The first network device sends, to the second network device and/or the third network device, a message indicating to deactivate the user plane connection of the first session. Correspondingly, the second network device and/or the third network device receive/receives, from the first network device, the message indicating to deactivate the user plane connection of the first session.

In some embodiments, after receiving the message indicating that the first session is inactive and/or requesting to deactivate the user plane connection of the first session, the first network device sends, to the second network device and/or the third network device, the message indicating to deactivate the user plane connection of the first session.

Specifically, after receiving the message indicating that the first session is inactive and/or requesting to deactivate the user plane connection of the first session, the first network device sends, to the second network device and/or the third network device, the message indicating to deactivate the user plane connection of the first session.

For example, the first network device sends, in a form of sending an N2 message to the second network device, the message indicating to deactivate the user plane connection of the first session.

For example, the first network device sends, in a form of sending an N4 session modification message to the third network device, the message indicating to deactivate the user plane connection of the first session.

S414: The second network device sends, to the terminal device, the message indicating to deactivate the user plane connection of the first session. Correspondingly, the terminal device receives, from the second network device, the message indicating to deactivate the user plane connection of the first session.

In some embodiments, after receiving the message that is sent by the first network device and that indicates to deactivate the user plane connection of the first session, the second network device sends, to the terminal device, the message indicating to deactivate the user plane connection of the first session.

In addition, after receiving, from the second network device, the message indicating to deactivate the user plane connection of the first session, the terminal device deactivates the user plane connection of the first session.

Specifically, for descriptions of deactivating the user plane connection of the first session, refer to the foregoing descriptions of deactivating the user plane connection of the first session in S411. For brevity, details are not described herein again in this application.

It should be understood that, in the foregoing solution, S405 to S409 and S410 to S414 are two independent solutions. If S405 to S409 are performed, S410 to S414 are not performed; or if S410 to S414 are performed, S405 to S409 are not performed.

Based on the foregoing solution, the first inactivity duration of the first QoS flow or the first inactivity duration of the first session is directly or indirectly determined by using the first periodicity information of the service of the terminal device, so that the first QoS flow is released in a timely manner, or the user plane connection of the first session is deactivated in a timely manner, to save network resources. In addition, the first QoS parameter of the first QoS flow, or the first QoS parameter of the first QoS flow and the first QoS parameter of the second QoS flow are directly or indirectly determined by using the second periodicity information of the service of the terminal device, so that the QoS parameter of the first QoS flow or the QoS parameters of the first QoS flow and the second QoS flow are determined based on service requirement information and the layered transmission information, to improve network resource utilization.

Therefore, when the terminal device performs a service having a data burst characteristic, for example, the XR service, if an important frame is lost, display of the frame may be affected, for example, long-lasting frame freezing occurs on an image. Based on the foregoing solution, according to a method for saving network resources and improving network resource utilization, service transmission performance is improved, impact of a frame loss caused in a transmission process is reduced, frame freezing time of an image is shortened, and user experience is improved.

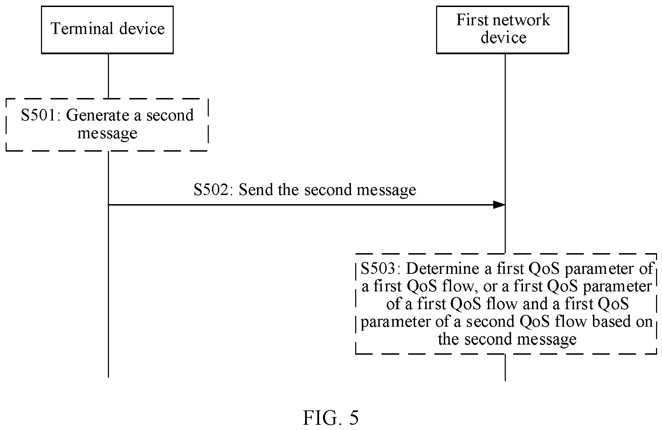

FIG. 5 is a schematic diagram of a session management method 500 according to an embodiment of this application. As shown in FIG. 5, the method 500 includes the following steps.

S501: A terminal device generates a second message.

In some embodiments, the terminal device generates the second message. The second message includes a second parameter or a third parameter. The second parameter is used by a first network device to determine a first QoS parameter of a first QoS flow, the third parameter is used by the first network device to determine the first QoS parameter of the first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow. Both the first QoS flow and the second QoS flow are used to transmit data of a service of the terminal device.

Specifically, for descriptions of the second message including the second parameter or the third parameter and descriptions of the second parameter and the third parameter, refer to the descriptions of the second message including the second parameter or the third parameter and the descriptions of the second parameter and the third parameter in S409. For brevity, details are not described herein again in this application.

S502: The terminal device sends a second message to the first network device. Correspondingly, the first network device receives the second message from the terminal device.

For example, the terminal device sends the second message to the first network device.

S503: The first network device determines the first QoS parameter of the first QoS flow, or the first QoS parameter of the first QoS flow and the first QoS parameter of the second QoS flow based on the second message.

In some embodiments, the first network device determines the first QoS parameter of the first QoS flow, or the first QoS parameter of the first QoS flow and the first QoS parameter of the second QoS flow based on the second message.

Specifically, for descriptions of determining, by the first network device, the first QoS parameter of the first QoS flow, or the first QoS parameter of the first QoS flow and the first QoS parameter of the second QoS flow based on the second message, refer to the foregoing descriptions of determining, by the first network device, the first QoS parameter of the first QoS flow, or the first QoS parameter of the first QoS flow and the first QoS parameter of the second QoS flow based on the second message after the first network device receives the second message from the first terminal device in S409. For brevity, details are not described herein again in this application.

Based on the foregoing solution, the first QoS parameter of the first QoS flow, or the first QoS parameter of the first QoS flow and the first QoS parameter of the second QoS flow are directly or indirectly determined by using second periodicity information of the service of the terminal device, so that the first QoS parameter of the first QoS flow, or the first QoS parameter of the first QoS flow and the first QoS parameter of the second QoS flow are determined based on service requirement information and layered transmission information, to improve network resource utilization.

Therefore, when the terminal device performs a service having a data burst characteristic, for example, an XR service, if an important frame is lost, display of the frame may be affected, for example, long-lasting frame freezing occurs on an image. Based on the foregoing solution, according to a method for improving network resource utilization, service transmission performance is improved, impact of a frame loss caused in a transmission process is reduced, frame freezing time of an image is shortened, and user experience is improved.

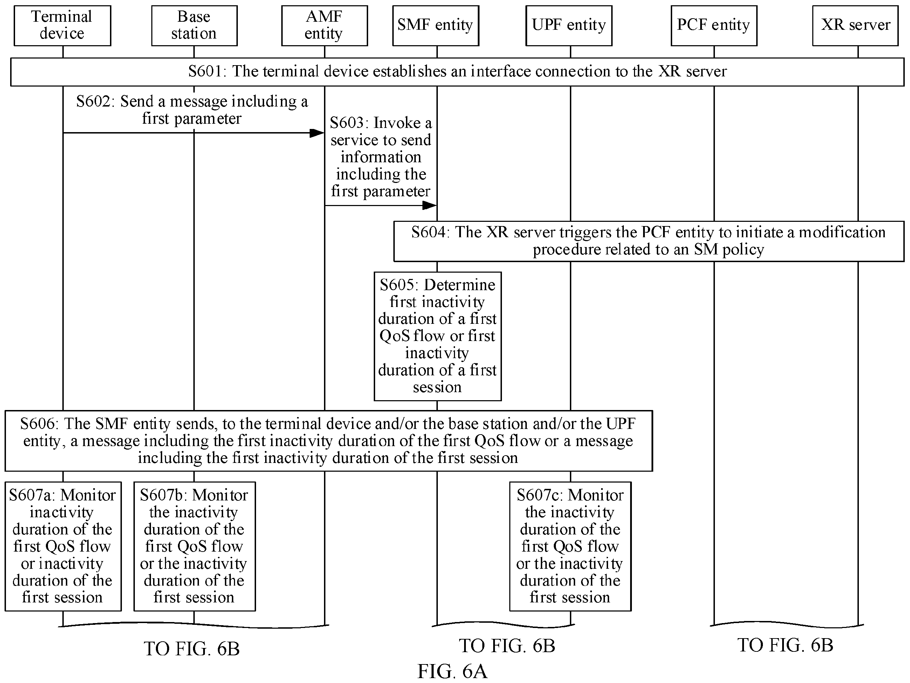

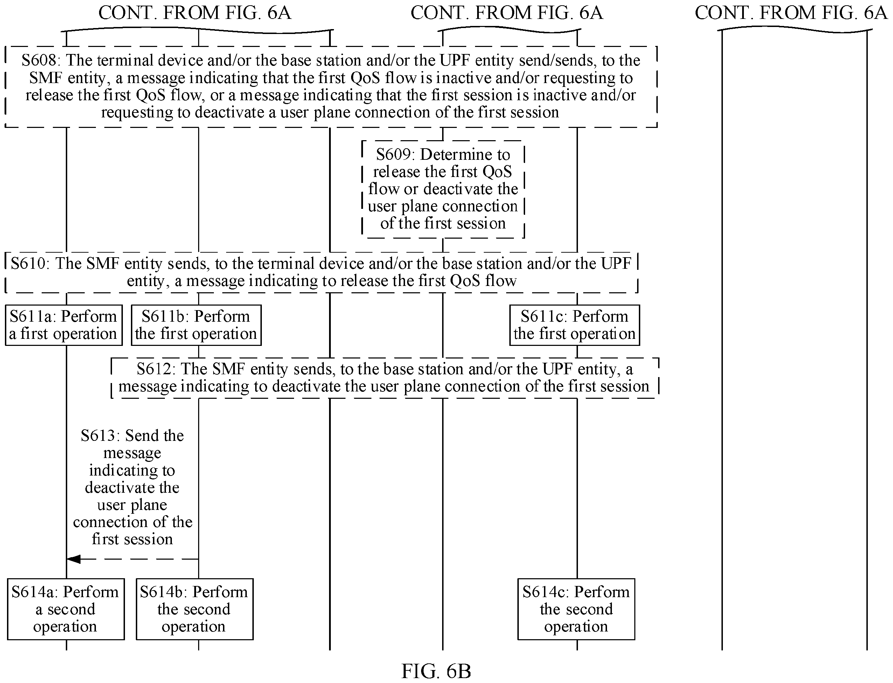

FIG. 6A and FIG. 6B are a schematic diagram of a session management method 600 according to an embodiment of this application. As shown in FIG. 6A and FIG. 6B, the method 600 includes the following steps.

S601: A terminal device establishes an interface (socket) connection to an XR server.

For example, the terminal device starts an XR application, and establishes the interface (socket) connection to the XR server.

Specifically, the terminal device establishes the interface (socket) connection to the XR server, and performs application-layer media negotiation. For example, the terminal device negotiates periodicity information of an XR media streaming service of the terminal device by using a hypertext transfer protocol (hypertext transfer protocol, HTTP). For descriptions of the periodicity information of the XR media streaming service of the terminal device, refer to the foregoing descriptions of the first periodicity information of the service of the terminal device in S401. For brevity, details are not described herein again in this application.

S602: The terminal device sends, to an AMF entity, a message including a first parameter. Correspondingly, the AMF entity receives, from the terminal device, the message including the first parameter.

For example, after the terminal device establishes the connection to the XR server, the terminal device determines, based on a negotiation result, that a first QoS flow is a GBR QoS flow, and sends, to the AMF entity, the message including the first parameter. The first parameter is used by a first network device to determine first inactivity duration of the first quality of service QoS flow of the terminal device, or is used by the first network device to determine first inactivity duration of a first session of the terminal device.

Specifically, the first inactivity duration of the first QoS flow indicates continuous first duration in which there is no data transmission on the first QoS flow, and the first inactivity duration of the first session indicates continuous first duration in which there is no data transmission on the first session. The first QoS flow or the first session is data used to transmit a service of the terminal device. Further, the first inactivity duration of the first QoS flow is used to determine to release the first QoS flow, and the first inactivity duration of the first session is used to determine to release a user plane connection of the first session.

For example, the terminal device sends a session modification request message to the AMF entity. The session request message carries the first parameter, a QoS requirement, and service-related quintuple (packet filter) information of the terminal device.

For descriptions of the first parameter, refer to the foregoing descriptions of the first parameter in S401. For brevity, details are not described herein again in this application.

S603: The AMF entity invokes a service to send the first parameter to an SMF entity. Correspondingly, the SMF entity receives, from the AMF entity, the first parameter for which the service is invoked.

For example, after receiving the first parameter sent by the terminal device, the AMF entity invokes the service to send the first parameter to the SMF entity.

For example, the service invoked by the AMF entity is Nsmf_PDUSession_CreateSMContext or Nsmf_PDUSession_UpdateSMContext.

S604: The XR server triggers a PCF entity to initiate a modification procedure related to an SM policy.

For example, after the XR server establishes the connection to the terminal device, the XR server sends, to the PCF entity based on the negotiation result, the message including the first parameter, and then the PCF entity initiates the modification procedure related to the SM policy. It should be noted that when the XR server sends, to the PCF entity, the message including the first parameter, the XR server directly sends the message to the PCF entity, or may send the message to the PCF entity via an NEF entity.

Specifically, the XR server includes the first parameter, the QoS requirement, and a service-related quintuple (packet filter) parameter of the terminal device in the message to be sent to the PCF entity. The PCF entity invokes a service to send the first parameter, the QoS requirement, and the service-related quintuple (packet filter) parameter of the terminal device to the SMF entity. The service invoked by the PCF is Npcf_SMPolicyControl_UpdateNotify.

S605: The SMF entity determines the first inactivity duration of the first QoS flow or the first inactivity duration of the first session.

For example, after receiving the message including the first parameter, the SMF entity determines the first inactivity duration of the first QoS flow or the first inactivity duration of the first session based on the first parameter.

Specifically, for descriptions of determining, by the SMF entity, the first inactivity duration of the first QoS flow or the first inactivity duration of the first session based on the first parameter, refer to the foregoing descriptions of determining, by the first network device, the first inactivity duration of the first QoS flow or the first inactivity duration of the first session based on the first parameter in S403. For brevity, details are not described herein again in this application.

S606: The SMF entity sends, to the terminal device and/or a base station and/or a UPF entity, a message including the first inactivity duration of the first QoS flow or a message including the first inactivity duration of the first session. Correspondingly, the terminal device and/or the base station and/or the UPF entity receive/receives, from the SMF entity, the message including the first inactivity duration of the first QoS flow or the message including the first inactivity duration of the first session.

For example, after determining the first inactivity duration of the first QoS flow or the first inactivity duration of the first session, the SMF entity sends, to the terminal device and/or the base station and/or the UPF entity, the message including the first inactivity duration of the first QoS flow or the message including the first inactivity duration of the first session, so that the terminal device and/or the base station and/or the UPF entity monitors/monitor whether continuous duration in which there is no data transmission on the first QoS flow reaches the first inactivity duration of the first QoS flow or whether continuous duration in which there is no data transmission on the first session reaches the first inactivity duration of the first session.

S607a: The terminal device monitors the inactivity duration of the first QoS flow or the inactivity duration of the first session.

For example, after receiving, from the SMF, the message including the first inactivity duration of the first QoS flow or the message including the first inactivity duration of the first session, the terminal device monitors the inactivity duration of the first QoS flow or the inactivity duration of the first session based on the message.

Specifically, the terminal device monitors, based on the message of the first inactivity duration of the first QoS flow, whether the duration in which there is no data transmission on the first QoS flow reaches the first inactivity duration of the first QoS flow, or monitors, based on the message of the first inactivity duration of the first session, whether the duration in which there is no data transmission on the first session reaches the first inactivity duration of the first session.

S607b: The base station monitors the inactivity duration of the first QoS flow or the inactivity duration of the first session.

For example, after receiving, from the SMF, the message including the first inactivity duration of the first QoS flow or the message including the first inactivity duration of the first session, the base station monitors the inactivity duration of the first QoS flow or the inactivity duration of the first session based on the message.

Specifically, the base station monitors, based on the message of the first inactivity duration of the first QoS flow, whether the duration in which there is no data transmission on the first QoS flow reaches the first inactivity duration of the first QoS flow, or monitors, based on the message of the first inactivity duration of the first session, whether the duration in which there is no data transmission on the first session reaches the first inactivity duration of the first session.

S607c: The UPF entity monitors the inactivity duration of the first QoS flow or the inactivity duration of the first session.

For example, after receiving, from the SMF, the message including the first inactivity duration of the first QoS flow or the message including the first inactivity duration of the first session, the UPF entity monitors the inactivity duration of the first QoS flow or the inactivity duration of the first session based on the message.

Specifically, the UPF entity monitors, based on the message of the first inactivity duration of the first QoS flow, whether the duration in which there is no data transmission on the first QoS flow reaches the first inactivity duration of the first QoS flow, or monitors, based on the message of the first inactivity duration of the first session, whether the duration in which there is no data transmission on the first session reaches the first inactivity duration of the first session.

It should be understood that S607a, S607b, and S607c are three independent steps.

S608: The terminal device and/or the base station and/or the UPF entity send/sends, to the SMF entity, a message indicating that the first QoS flow is inactive and/or requesting to release the first QoS flow, or a message indicating that the first session is inactive and/or requesting to deactivate the user plane connection of the first session. Correspondingly, the SMF entity receives, from the terminal device and/or the base station and/or the UPF entity, the message indicating that the first QoS flow is inactive and/or requesting to release the first QoS flow, or the message indicating that the first session is inactive and/or requesting to deactivate the user plane connection of the first session.

In some embodiments, when the duration in which there is no data transmission on the first QoS flow reaches the first inactivity duration of the first QoS flow, the terminal device and/or the base station and/or the UPF entity send/sends, to the SMF entity, the message indicating that the first QoS flow is inactive and/or requesting to release the first QoS flow; or when the duration in which there is no data transmission on the first session reaches the first inactivity duration of the first session, the terminal device and/or the base station and/or the UPF entity send/sends, to the SMF entity, the message indicating that the first session is inactive and/or requesting to deactivate the user plane connection of the first session.

In a possible implementation, the UPF entity sends the message in a form of an N4 report (N4 report) message to the SMF entity. The message is represented as a report message indicating that the duration in which there is no data transmission on the first QoS flow reaches the first inactivity duration of the first QoS flow, and further includes QoS flow identifier (QFI) information of the first QoS flow, in other words, indicates indicate that the first QoS flow meets a reporting condition. Alternatively, the message is represented as a report message indicating that the duration in which there is no data transmission on the first session reaches the first inactivity duration of the first session, and indicates that the first session meets a reporting condition.

In another possible implementation, the terminal device sends, to the SMF entity, a report message indicating that the duration in which there is no data transmission on the first QoS flow reaches the first inactivity duration of the first QoS flow, to indicate that the first QoS flow is inactive and/or request to release the first QoS flow; or sends, to the SMF entity, a report message indicating that the duration in which there is no data transmission on the first session reaches the first inactivity duration of the first session, to indicate that the first session is inactive and/or request to deactivate the user plane connection of the first session.

In another possible implementation, the base station sends, to the SMF entity, a report message indicating that the duration in which there is no data transmission on the first QoS flow reaches the first inactivity duration of the first QoS flow, to indicate that the first QoS flow is inactive and/or request to release the first QoS flow; or sends, to the SMF entity, a report message indicating that the duration in which there is no data transmission on the first session reaches the first inactivity duration of the first session, to indicate that the first session is inactive and/or request to deactivate the user plane connection of the first session.

S609: The SMF entity determines to release the first QoS flow or deactivate the user plane connection of the first session.

In some embodiments, the SMF entity determines, based on the message indicating that the first QoS flow is inactive and/or requesting to release the first QoS flow, whether the to-be-released first QoS flow is associated with a QoS flow, and determines to release the first QoS flow; or the SMF entity determines, based on the message indicating that the first session is inactive and/or requesting to deactivate the user plane connection of the first session, to deactivate the user plane connection of the first session.

S610: The SMF entity sends, to the terminal device and/or the base station and/or the UPF entity, a message indicating to release the first QoS flow.

In some embodiments, when determining to release the first QoS flow, the SMF entity sends, to the terminal device and/or the base station and/or the UPF entity, the message indicating to release the first QoS flow.

In a possible implementation, the SMF entity sends, in a form of sending a PDU session modification message to the terminal device, the message indicating to release the first QoS flow.

In another possible implementation, the SMF entity sends, in a form of sending an N2 message to the base station, the message indicating to release the first QoS flow.

In another possible implementation, the SMF entity sends, in a form of sending an N4 session modification message to the UPF entity, the message indicating to release the first QoS flow.

S611a: The terminal device performs a first operation.

For example, the terminal device performs the first operation, and the first operation includes releasing the first QoS flow, or deactivating a user plane connection of a second QoS flow associated with the first QoS flow.

In a possible implementation, the terminal device monitors the inactivity duration of the first QoS flow, and when the duration in which there is no data transmission on the first QoS flow reaches the first inactivity duration of the first QoS flow, the terminal device releases the first QoS flow, or deactivates the user plane connection of the second QoS flow associated with the first QoS flow.

In some embodiments, the first QoS flow is associated with the second QoS flow, and the terminal device deletes an association relationship between the first QoS flow and the second QoS flow, or releases the second QoS flow associated with the first QoS flow. Both the first QoS flow and the second QoS flow are used to transmit data of the service of the terminal device, the first QoS flow is used to transmit data of high importance in the service, and the second QoS flow is used to transmit data of low importance in the service.

In some embodiments, the first QoS flow is associated with no QoS flow, and the terminal device directly releases the first QoS flow.

In another possible implementation, the terminal device performs the first operation by receiving the message that is sent by the SMF entity and that indicates to release the first QoS flow.

S611b: The base station performs the first operation.

For example, the base station performs the first operation, and the first operation includes releasing the first QoS flow, or deactivating the user plane connection of the second QoS flow associated with the first QoS flow.

Specifically, for descriptions of performing the first operation by the base station, refer to the foregoing descriptions of performing the first operation by the terminal device in S611a. For brevity, details are not described herein again in this application.

S611c: The UPF entity performs the first operation.

For example, the UPF entity performs the first operation, and the first operation includes releasing the first QoS flow, or deactivating the user plane connection of the second QoS flow associated with the first QoS flow.

Specifically, for descriptions of performing the first operation by the UPF entity, refer to the foregoing descriptions of performing the first operation by the terminal device in S611a. For brevity, details are not described herein again in this application.

S612: The SMF entity sends, to the base station and/or the UPF entity, a message indicating to deactivate the user plane connection of the first session. Correspondingly, the base station and/or the UPF entity receive/receives, from the SMF entity, the message indicating to deactivate the user plane connection of the first session.

In some embodiments, the SMF entity sends, to the base station and/or the UPF entity, the message indicating to deactivate the user plane connection of the first session.

For example, the SMF entity sends, by sending an N4 session modification message to the UPF entity, the message indicating to deactivate the user plane connection of the first session.

S613: The base station sends, to the terminal device, the message indicating to deactivate the user plane connection of the first session, for example, an RRC reconfiguration message. Correspondingly, the terminal device receives, from the base station, the message indicating to deactivate the user plane connection of the first session.

In some embodiments, after receiving, from the SMF entity, the message indicating to deactivate the user plane connection of the first session, the base station sends, to the terminal device, the message indicating to deactivate the user plane connection of the first session.

S614a: The terminal device performs a second operation.

For example, the terminal device performs the second operation. The second operation includes deactivating the user plane connection of the first session, or deleting an association relationship between the first session and a second session. Both the first session and the second session are used to transmit data of the service of the terminal device, the first session is used to transmit data of high importance in the service, and the second session is used to transmit data of low importance in the service.

In a possible implementation, the terminal device monitors the inactivity duration of the first session, and when the duration in which there is no data transmission on the first session reaches the first inactivity duration of the first session, the terminal device deactivates the user plane connection of the first session, or deletes the association relationship between the first session and the second session.

In another possible implementation, the terminal device deactivates the user plane connection of the first session by receiving the message that is sent by the base station and that indicates to deactivate the user plane connection of the first session, or deletes the association relationship between the first session and the second session.

Specifically, the terminal device deactivates the user plane connection of the first session by releasing a radio bearer corresponding to the first session.

S614b: The base station performs the second operation.

For example, after receiving the message that is sent by the SMF entity and that indicates to deactivate the user plane connection of the first session, the base station performs the second operation. For the second operation, refer to the foregoing descriptions of the second operation in S614a.

Specifically, the base station deactivates the user plane connection of the first session by releasing tunnel info (including an IP address and a tunnel port number of the UPF entity) of a UPF entity end corresponding to the first session and the radio bearer corresponding to the first session.

S614c: The UPF entity performs the second operation.

For example, after receiving the message that is sent by the SMF entity and that indicates to deactivate the user plane connection of the first session, the UPF entity performs the second operation. For the second operation, refer to the foregoing descriptions of the second operation in S614a. Specifically, the UPF entity deactivates the user plane connection of the first session by releasing tunnel info (including an IP address and a tunnel port number of the base station) of an AN end corresponding to the first session.

It should be understood that the releasing the user plane connection of the first session means releasing user plane connections corresponding to all QoS flows included in the first session, because the tunnel info and a PDU session configured for the radio bearer are both configured at a granularity of a QoS flow.

Based on the foregoing solution, when the terminal device or the XR server determines to use the first QoS flow (the GBR QoS flow), the terminal device or the XR server determines second inactivity duration of the first QoS flow or second inactivity duration of the first session based on the first periodicity information of the service of the terminal device, and sends the second inactivity duration of the first QoS flow or the second inactivity duration of the first session to the SMF entity. The SMF entity determines the first inactivity duration of the first QoS flow or the first inactivity duration of the first session based on a request of the terminal device or the XR server and with reference to a network policy (network quality jitter or network load). The SMF entity sends, to the terminal device and/or the UPF entity and/or the base station, a message including information about the first inactivity duration of the first QoS flow or a message including information about the first inactivity duration of the first session, to request the terminal device and/or the UPF entity and/or the base station to monitor the duration in which there is no data transmission on the first QoS flow or the duration in which there is no data transmission on the first session, and perform the first operation or report an event to the SMF entity if the duration in which there is no data transmission on the first QoS flow reaches the first inactivity duration of the first QoS flow, so that the SMF entity determines to release the first QoS flow (the GBR QoS flow) and update the QoS flow (the second QoS flow) associated with the first QoS flow, or report an event to the SMF entity if the duration in which there is no data transmission on the first session reaches the first inactivity duration of the first session, so that the SMF entity determines to deactivate the user plane connection of the first session. The SMF entity sends, to the terminal device and/or the UPF entity and/or the base station, the message indicating to release the first QoS flow, so that the terminal device and/or the UPF entity and/or the base station perform/performs the first operation in a timely manner, or send/sends, to a second network device, the message indicating to deactivate the user plane connection of the first session, so that the second network device sends, to the terminal device, the message indicating to deactivate the user plane connection of the first session, and the terminal device performs the second operation in a timely manner, to save network resources.

Therefore, when the terminal device performs a service having a data burst characteristic, for example, an XR service, if an important frame is lost, display of the frame may be affected, for example, long-lasting frame freezing occurs on an image. Based on the foregoing solution, according to a method for saving network resources, service transmission performance is improved, impact of a frame loss caused in a transmission process is reduced, frame freezing time of an image is shortened, and user experience is improved.

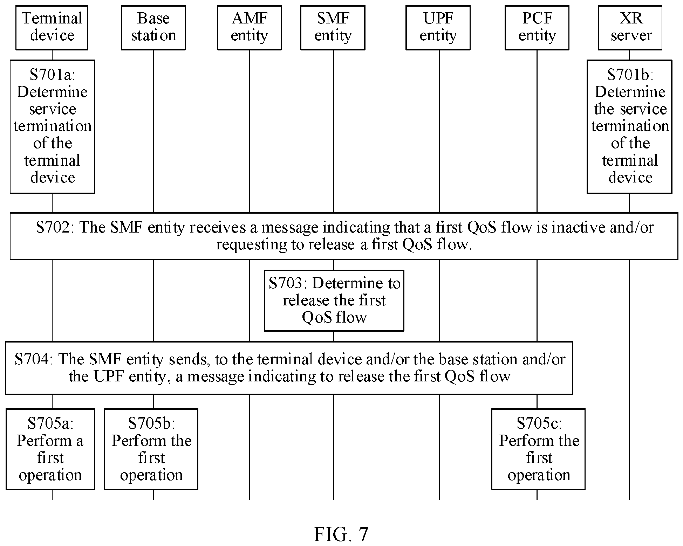

FIG. 7 is a schematic diagram of a session management method 700 according to an embodiment of this application. As shown in FIG. 7, the method 700 includes the following steps.

S701a: A terminal device determines service termination of the terminal device.

For example, the terminal device determines the service termination of the terminal device.

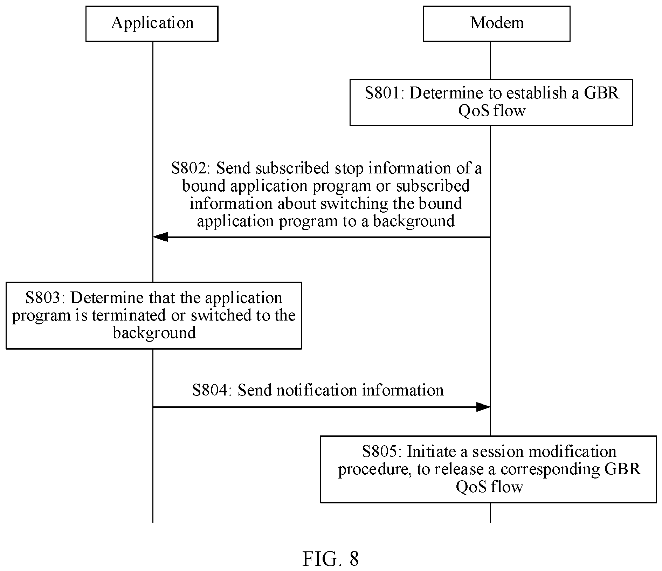

In a possible implementation, the terminal device determines the service termination of the terminal device by using an internal application of the terminal device and a modem, that is, by using a method 800 for determining service termination of the terminal device. FIG. 8 is a schematic diagram of the method 800 for determining service termination of the terminal device. As shown in FIG. 8, the method 800 includes the following steps.

S801: The modem determines to establish a GBR QoS flow.

For example, when transmitting data of a service of the terminal device, the modem determines to establish the GBR QoS flow (a first QoS flow).

S802: The modem sends, to the application, subscribed stop information of a bound application program or subscribed information about switching the bound application program to a background. Correspondingly, the application receives, from the modem, the subscribed stop information of the bound application program or the subscribed information about switching the bound application program to the background.

For example, after determining to establish the GBR QoS flow (the first QoS flow), the modem sends, to the application, the subscribed stop information of the bound application program or the subscribed information about switching the bound application program to the background. The information indicates that a subscribed event is stop of service detection (stop of service detection), and a connection identifier is an IP address, a session identifier (session ID), or quintuple (packet filter) information associated with a session (session), or another identifier used for connection in the terminal device.

S803: The application determines that the application program is terminated or switched to the background.

For example, after receiving the subscribed stop information of the bound application program or the subscribed information about switching the bound application program to the background, the application terminates the application program or switches the application program to the background.

S804: The application sends notification information to the modem. Correspondingly, the modem receives the notification information from the application.

For example, after determining that the application program is terminated or switched to the background, the application sends the notification information to the modem, to notify the modem that the application has terminated the application program or switched the application program to the background. The notification information includes information about the stop of service detection, information about the connection identifier, or the quintuple (packet filter) information associated with the session (session).

S805: The modem initiates a session modification procedure, to release a corresponding GBR QoS flow.

For example, after receiving the notification information, the modem initiates the session modification procedure.

In another possible implementation, the terminal device does not require interaction between the internal application and the modem. After determining second inactivity duration of the GBR QoS flow (the first QoS flow) based on first periodicity information of an (XR) service of the terminal device, the terminal device monitors an inactivity status of the GBR QoS flow (the first QoS flow), and initiates the session modification procedure when continuous duration in which there is no data transmission on the GBR QoS flow (the first QoS flow) reaches the second inactivity duration of the GBR QoS flow (the first QoS flow). For descriptions of the first periodicity information of the (XR) service of the terminal device, refer to the foregoing descriptions of the first periodicity information of the service of the terminal device in S401. For brevity, details are not described herein again in this application.

S701b: The XR server determines the service termination of the terminal device.

For example, the XR server determines that the service termination of the terminal device.

S702: The SMF entity receives a message indicating that the first QoS flow is inactive and/or requesting to release the first QoS flow.

For example, the SMF entity receives, from the terminal device or the XR server, the message indicating that the first QoS flow is inactive and/or requesting to release the first QoS flow.

In a possible implementation, when the continuous duration in which there is no data transmission on the first QoS flow reaches the second inactivity duration of the first QoS flow, the terminal device sends, to the SMF entity, the message indicating that the first QoS flow is inactive and/or requesting to release the first QoS flow. Correspondingly, the SMF entity receives, from the terminal device, the message indicating that the first QoS flow is inactive and/or requesting to release the first QoS flow.

Specifically, the terminal device sends, to the SMF entity, a report message indicating that the duration in which there is no data transmission on the first QoS flow reaches the first inactivity duration of the first QoS flow, to indicate that the first QoS flow is inactive and/or request to release the first QoS flow.

In another possible implementation, after determining the service termination of the terminal device, the XR server sends an AF notification message to an SMF entity via a policy control function (policy control function, PCF) entity, so that the PCF entity sends an SM policy association modification message to the SMF entity, and triggers the SMF entity to release the first QoS flow. It is understood that the SMF entity receives the message indicating that the first QoS flow is inactive and/or requesting to release the first QoS flow.

S703: The SMF entity determines to release the first QoS flow.

For example, based on the message indicating that the first QoS flow is inactive and/or requesting to release the first QoS flow, the SMF entity determines whether the to-be-released first QoS flow is associated with a QoS flow, and determines to release the first QoS flow.

S704: The SMF entity sends, to the terminal device and/or a base station and/or a UPF entity, a message indicating to release the first QoS flow.

For example, when determining to release the first QoS flow, the SMF entity sends, to the terminal device and/or the base station and/or the UPF entity, the message indicating to release the first QoS flow.

In a possible implementation, the SMF entity sends, in a form of sending a PDU session modification message to the terminal device, the message indicating to release the first QoS flow.

In another possible implementation, the SMF entity sends, in a form of sending an N4 session modification message to the UPF entity, the message indicating to release the first QoS flow.

S705a: The terminal device performs a first operation.

For example, the terminal device performs the first operation, and the first operation includes releasing the first QoS flow, or deactivating a user plane connection of a second QoS flow associated with the first QoS flow.

Specifically, for descriptions of performing the first operation by the terminal device, refer to the foregoing descriptions of performing the first operation by the terminal device in S612a. For brevity, details are not described herein again in this application.

S705b: The base station performs the first operation.

For example, the base station performs the first operation, and the first operation includes releasing the first QoS flow, or deactivating the user plane connection of the second QoS flow associated with the first QoS flow.

Specifically, for descriptions of performing the first operation by the base station, refer to the foregoing descriptions of performing the first operation by the base station in S612b. For brevity, details are not described herein again in this application.

S705c: The UPF entity performs the first operation.

For example, the UPF entity performs the first operation, and the first operation includes releasing the first QoS flow, or deactivating the user plane connection of the second QoS flow associated with the first QoS flow.

Specifically, for descriptions of performing the first operation by the UPF entity, refer to the foregoing descriptions of performing the first operation by the UPF entity in S612c. For brevity, details are not described herein again in this application.

Based on the foregoing solution, after determining that the service using the first QoS flow (the GBR QoS flow) is terminated, the terminal device releases the first QoS flow (the GBR QoS flow). In a process in which the terminal device determines that the service using the first QoS flow (the GBR QoS flow) is terminated, the modem of the terminal device establishes a PDU session of the first QoS flow (the GBR QoS flow), and subscribes to, from the application of the terminal device, the information about termination of the bound application program or switching the bound application program to the background. After receiving the notification, the application of the terminal device triggers PDU session modification. Therefore, network resources are saved.

Therefore, when the terminal device performs a service having a data burst characteristic, for example, the XR service, if an important frame is lost, display of the frame may be affected, for example, long-lasting frame freezing occurs on an image. Based on the foregoing solution, according to a method for saving network resources, service transmission performance is improved, impact of a frame loss caused in a transmission process is reduced, frame freezing time of an image is shortened, and user experience is improved.

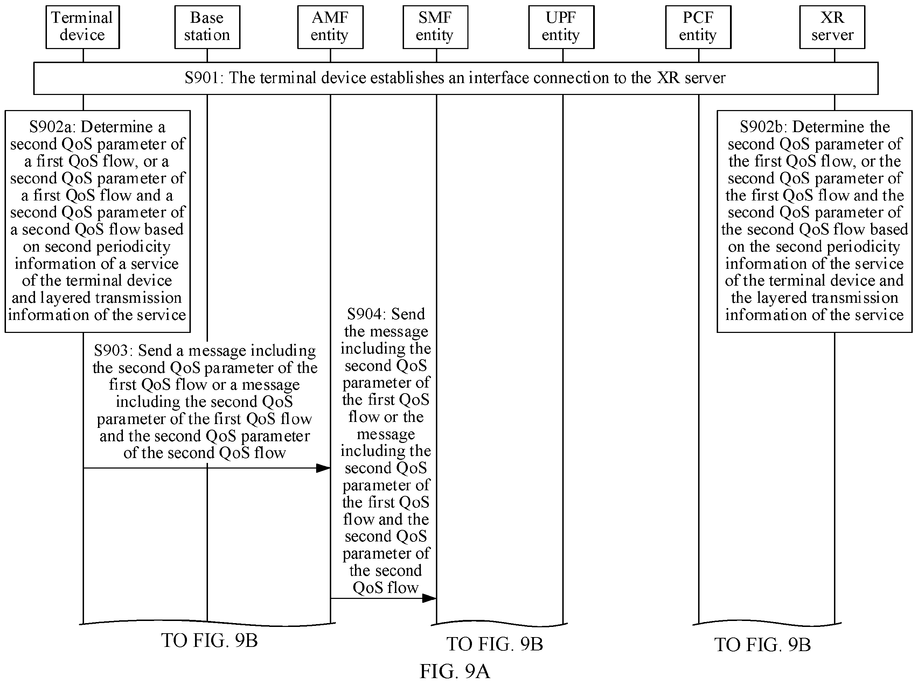

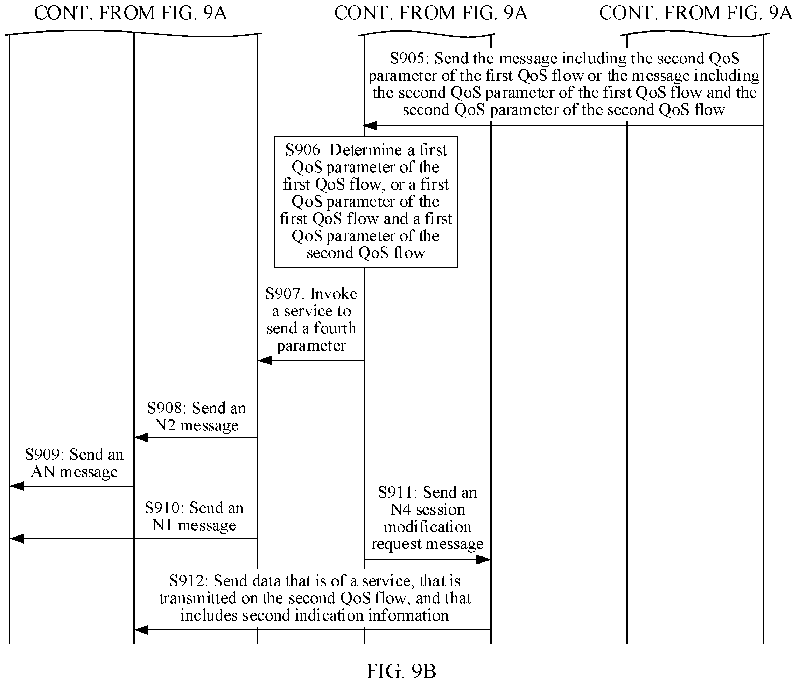

FIG. 9A and FIG. 9B are a schematic diagram of a session management method 900 according to an embodiment of this application. As shown in FIG. 9A and FIG. 9B, the method 900 includes the following steps.

S901: A terminal device establishes an interface (socket) connection to an XR server.

For example, the terminal device starts an XR application, and establishes the interface (socket) connection to the XR server.

Specifically, the terminal device establishes the interface (socket) connection to the XR server, and performs application-layer media negotiation. For example, the terminal device negotiates periodicity information of an XR media streaming service of the terminal device by using a hypertext transfer protocol (hypertext transfer protocol, HTTP). For descriptions of the periodicity information of the XR media streaming service of the terminal device, refer to the foregoing descriptions of the first periodicity information of the service of the terminal device in S401. For brevity, details are not described herein again in this application.

S902a: The terminal device determines a second QoS parameter of a first QoS flow, or a second QoS parameter of a first QoS flow and a second QoS parameter of a second QoS flow based on second periodicity information of the service of the terminal device and layered transmission information of the service.

For example, the terminal device determines the second QoS parameter of the first QoS flow, or the second QoS parameter of the first QoS flow and the second QoS parameter of the second QoS flow based on the second periodicity information of the service of the terminal device and the layered transmission information of the service.

Specifically, for descriptions of determining, by the terminal device, the second QoS parameter of the first QoS flow, or the second QoS parameter of the first QoS flow and the second QoS parameter of the second QoS flow based on the second periodicity information of the service of the terminal device and the layered transmission information of the service, refer to the foregoing descriptions of determining, by the terminal device, the second QoS parameter of the first QoS flow, or the second QoS parameter of the first QoS flow and the second QoS parameter of the second QoS flow based on the second periodicity information of the service of the terminal device and the layered transmission information of the service in S409. For brevity, details are not described herein again in this application.

S902b: The XR server determines the second QoS parameter of the first QoS flow, or the second QoS parameter of the first QoS flow and the second QoS parameter of the second QoS flow based on the second periodicity information of the service of the terminal device and the layered transmission information of the service.

For example, the XR server determines the second QoS parameter of the first QoS flow, or the second QoS parameter of the first QoS flow and the second QoS parameter of the second QoS flow based on the second periodicity information of the service of the terminal device and the layered transmission information of the service.

Specifically, for descriptions of determining, by the XR server, the second QoS parameter of the first QoS flow, or the second QoS parameter of the first QoS flow and the second QoS parameter of the second QoS flow based on the second periodicity information of the service of the terminal device and the layered transmission information of the service, refer to the foregoing descriptions of determining, by the terminal device, the second QoS parameter of the first QoS flow, or the second QoS parameter of the first QoS flow and the second QoS parameter of the second QoS flow based on the second periodicity information of the service of the terminal device and the layered transmission information of the service in S409. For brevity, details are not described herein again in this application.

S903: The terminal device sends, to an AMF entity, a message including the second QoS parameter of the first QoS flow or the message including the second QoS parameter of the first QoS flow and the second QoS parameter of the second QoS flow. Correspondingly, the AMF entity receives, from the terminal device, the message including the second QoS parameter of the first QoS flow or the message including the second QoS parameter of the first QoS flow and the second QoS parameter of the second QoS flow.

For example, after determining the second QoS parameter of the first QoS flow, or the second QoS parameter of the first QoS flow and the second QoS parameter of the second QoS flow, the terminal device sends, to the AMF entity, the message including the second QoS parameter of the first QoS flow or the message including the second QoS parameter of the first QoS flow and the second QoS parameter of the second QoS flow.

For example, the terminal device sends a PDU session modification request message to the AMF entity. The message includes information about the foregoing parameter.

S904: The AMF entity sends, to an SMF entity, the message including the second QoS parameter of the first QoS flow or the message including the second QoS parameter of the first QoS flow and the second QoS parameter of the second QoS flow. Correspondingly, the SMF entity receives, from the AMF entity, the message including the second QoS parameter of the first QoS flow or the message including the second QoS parameter of the first QoS flow and the second QoS parameter of the second QoS flow.

For example, the AMF entity sends, to the SMF entity, the message including the second QoS parameter of the first QoS flow or the message including the second QoS parameter of the first QoS flow and the second QoS parameter of the second QoS flow.

For example, the AMF entity sends a PDU session SM context update message to the SMF entity. The message includes the information about the foregoing parameter.

S905: The XR server sends, to the SMF entity, the message including the second QoS parameter of the first QoS flow or the message including the second QoS parameter of the first QoS flow and the second QoS parameter of the second QoS flow. Correspondingly, the SMF entity receives, from the XR server, the message including the second QoS parameter of the first QoS flow or the message including the second QoS parameter of the first QoS flow and the second QoS parameter of the second QoS flow.

For example, after determining the second QoS parameter of the first QoS flow, or the second QoS parameter of the first QoS flow and the second QoS parameter of the second QoS flow, the XR server sends, to the SMF entity, the message including the second QoS parameter of the first QoS flow or the message including the second QoS parameter of the first QoS flow and the second QoS parameter of the second QoS flow.

For example, the XR server initiates a modification procedure associated with an SM policy to the SMF entity, and includes information about the foregoing parameter in a request message.

S906: The SMF entity determines a first QoS parameter of the first QoS flow, or a first QoS parameter of the first QoS flow and a first QoS parameter of the second QoS flow based on the second message.

For example, the SMF entity determines the first QoS parameter of the first QoS flow, or the first QoS parameter of the first QoS flow and the first QoS parameter of the second QoS flow based on the second QoS parameter of the first QoS flow, or the second QoS parameter of the first QoS flow and the second QoS parameter of the second QoS flow, and information about a network policy.

In addition, the SMF entity further determines a use mechanism of a QoS flow based on information about the first QoS parameter of the first QoS flow, or information about the first QoS parameter of the first QoS flow and the first QoS parameter of the second QoS flow. To be specific, the second QoS flow is used to transmit only data of an (XR) service of the terminal device, or the second QoS flow is used to transmit both data of an (XR) service of the terminal device and data of another service.

S907: The SMF entity invokes a service to send a fourth parameter to an AMF entity. Correspondingly, the AMF entity receives, from the SMF entity, the fourth parameter for which the service is invoked.

For example, the SMF entity invokes the service to send the fourth parameter to the AMF entity. The fourth parameter includes the first QoS parameter of the first QoS flow, or the first QoS parameter of the first QoS flow and the first QoS parameter of the second QoS flow, and indicates that there is an association relationship between the first QoS flow and the second QoS flow.

A service provided by the AMF entity is Namf_Communication_N1N2MessageTransfer, where an N1 SM container is to be sent by the SMF entity to the terminal device via the AMF entity, N2 SM information is to be sent by the SMF entity to a base station via the AMF entity, and the fourth parameter is included in the N2 SM information. In addition, the N1 SM container is also used to send the parameters of the first QoS flow and the second QoS flow and the association relationship to the terminal device.

In addition, the fourth parameter further includes first indication information. The first indication information indicates whether data transmitted on the second QoS flow is only data that has an association relationship with the first QoS flow, that is, the second QoS flow is used to transmit only the data of the XR service of the terminal device, or transmit the data of the XR service of the terminal device and the data of the another service. If the second QoS flow is used to transmit both the data of the XR service of the terminal device and the data of the another service, a radio access network (RAN) device needs to parse whether a header (where for example, a GTP protocol is usually used as a transmission protocol between a UPF entity and a RAN, and the header is a GTP user plane data header (GTP-U header)) of a data packet subsequently received from the second QoS flow carries second indication information. The second indication information indicates whether the data packet is a data packet that has an association relationship with a data packet transmitted on the first QoS flow. If the second QoS flow is used to transmit only the data of the XR service of the terminal device, the RAN device does not need to parse a header of a data packet subsequently received from the second QoS flow.

S908: The AMF entity sends an N2 message to the base station. Correspondingly, the base station receives the N2 message from the AMF entity.

For example, after receiving a fourth message sent by the SMF entity, the AMF entity sends the N2 message to the base station. The N2 message includes the first indication information.

S909: The base station sends an AN message to the terminal device. Correspondingly, the terminal device receives the AN message from the base station.

For example, after receiving the N2 message from the AMF entity, the base station sends the AN message to the terminal device. The AN message includes information about the N1 SM container, that is, information including a session modification instruction.

S910: The AMF entity sends an N1 message to the terminal device. Correspondingly, the terminal device receives the N1 message from the AMF entity.

For example, after receiving the fourth message sent by the SMF entity, the AMF entity sends the N1 message to the terminal device. The N1 message includes the first indication information.

Specifically, the AMF entity sends the N1 message to the terminal device via the base station.

It should be understood that, in the foregoing solution, S908 and S909 are independent solutions of S910.

S911: The SMF entity sends an N4 session modification request message to the UPF entity. Correspondingly, the UPF entity receives the N4 session modification request message from the SMF entity.

For example, the SMF entity sends the N4 session modification request message to the UPF entity. The message includes information about the first QoS parameter of the first QoS flow and the first QoS parameter of the second QoS flow and information about the association relationship between the first QoS flow and the second QoS flow.

S912: The UPF entity sends, to the base station, data that is of the service, that is transmitted on the second QoS flow, and that includes the second indication information. Correspondingly, the base station receives, from the UPF entity, the data that is of the service, that is transmitted on the second QoS flow, and that includes the second indication information.

For example, after receiving the N4 session modification request message from the SMF entity, the UPF sends, to the base station, the data that is of the service, that is transmitted on the second QoS flow, and that includes the second indication information, to indicate whether the data has an association relationship with data transmitted on the first QoS flow.

Based on the foregoing solution, the terminal device or the XR server determines, based on a configuration of a frame of high importance and a frame of low importance, a frame size ratio, a GFBR requirement of the service, and a frame rate, a QoS parameter corresponding to each layer after layering, and sends a request to the SMF entity. The SMF entity determines the use mechanism of the QoS flow based on the QoS parameter requested by the terminal device or the XR server, and determines a QoS parameter corresponding to the first QoS flow, or QoS parameters corresponding to the first QoS flow and the second QoS flow, to improve network resource utilization.

Then, the SMF entity sends the first indication information to the base station (the RAN), to indicate whether the data transmitted on the second QoS flow is only data that has an association relationship with the first QoS flow, that is, whether the data transmitted on the second QoS flow is only the data of the (XR) service of the terminal device or the data of the (XR) service and the another service. If yes, the RAN parses whether the header (for example, the GTP-U header) of the data packet subsequently received by using the second QoS flow carries the second indication information. If no, the RAN does not need to parse the header of the data packet subsequently received by using the second QoS flow. The second indication information indicates whether the data packet is the data packet that has the association relationship with the data packet transmitted on the first QoS flow.

In addition, when sending data mapped to the second QoS flow to the RAN, the UPF entity adds the second indication information to a header of a data packet. For example, when the second indication information is 1, it indicates that the data packet is a data packet that has an association relationship with the data packet transmitted on the first QoS flow. When the second indication information is 0, it indicates that the data packet is a data packet that has no association relationship with the data packet transmitted on the first QoS flow.

Therefore, when the terminal device performs a service having a data burst characteristic, for example, the XR service, if an important frame is lost, display of the frame may be affected, for example, long-lasting frame freezing occurs on an image. Based on the foregoing solution, according to a method for improving network resource utilization, service transmission performance is improved, impact of a frame loss caused in a transmission process is reduced, frame freezing time of an image is shortened, and user experience is improved.

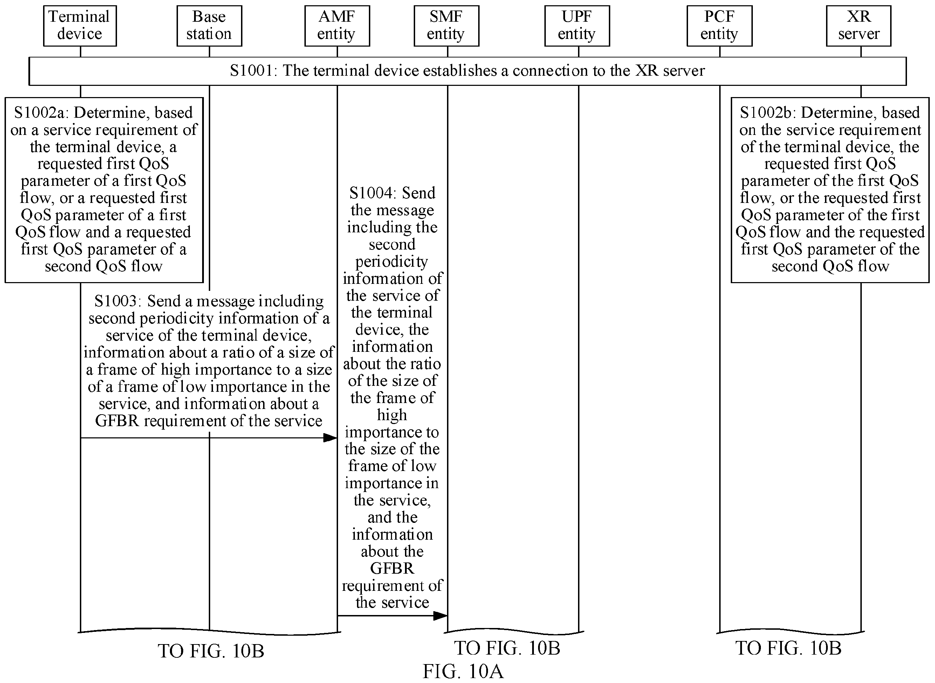

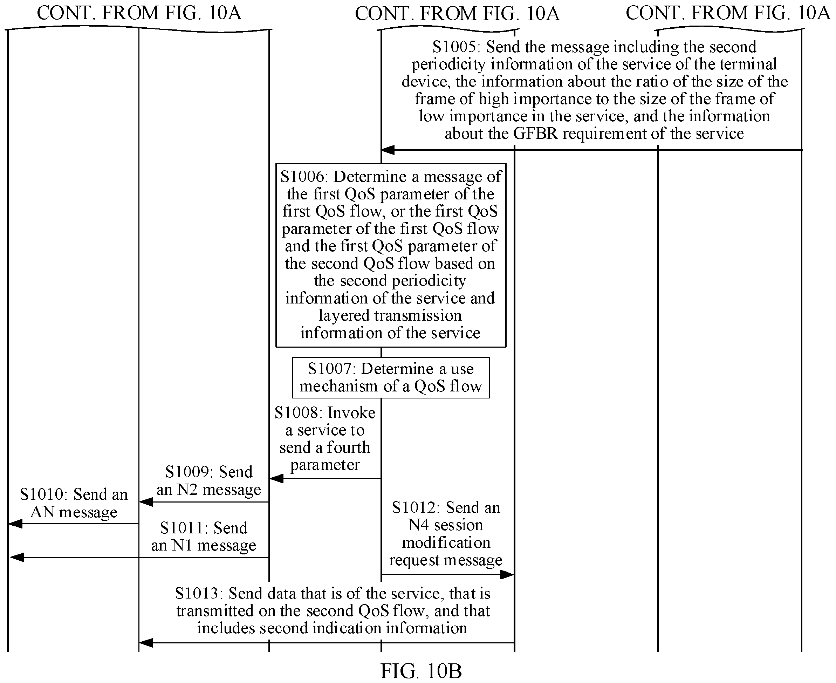

FIG. 10A and FIG. 10B is a schematic diagram of a session management method 1000 according to an embodiment of this application. As shown in FIG. 10A and FIG. 10B, the method 1000 includes the following steps.

S 1001: A terminal device establishes an interface (socket) connection to an XR server.

For example, the terminal device starts an XR application, and establishes the interface (socket) connection to the XR server.

Specifically, the terminal device establishes the interface (socket) connection to the XR server, and performs application-layer media negotiation. For example, the terminal device negotiates periodicity information of an XR media streaming service of the terminal device by using a hypertext transfer protocol. For descriptions of the periodicity information of the XR media streaming service of the terminal device, refer to the foregoing descriptions of the first periodicity information of the service of the terminal device in S401. For brevity, details are not described herein again in this application.

S 1002a: The terminal device determines, based on a service requirement of the terminal device, a requested first QoS parameter of a first QoS flow, or a requested first QoS parameter of a first QoS flow and a requested first QoS parameter of a second QoS flow.

For example, after establishing the interface connection to the XR server, the terminal device determines, based on a negotiation result, to request the SMF entity for the first QoS parameter of the first QoS flow, or the first QoS parameter of the first QoS flow and the first QoS parameter of the second QoS flow.

S1002b: The XR server determines, based on the service requirement of the terminal device, the requested first QoS parameter of the first QoS flow, or the requested first QoS parameter of the first QoS flow and the requested first QoS parameter of the second QoS flow.

For example, after establishing the interface connection to the terminal device, the XR server determines, based on the negotiation result, to request the SMF entity for the first QoS parameter of the first QoS flow, or the first QoS parameter of the first QoS flow and the first QoS parameter of the second QoS flow.

S1003: The terminal device sends, to an AMF entity, a message including second periodicity information of a service of the terminal device, information about a ratio of a size of a frame of high importance to a size of a frame of low importance in the service, and information about a GFBR requirement of the service. Correspondingly, the AMF entity receives, from the terminal device, the message including the second periodicity information of the service of the terminal device, the information about the ratio of the size of the frame of high importance to the size of the frame of low importance in the service, and the information about the GFBR requirement of the service.

For example, after determining the requested QoS parameter, the terminal device sends, to the AMF entity, the message including the second periodicity information of the service of the terminal device, the information about the ratio of the size of the frame of high importance to the size of the frame of low importance in the service, and the information about the GFBR requirement of the service.

For example, the terminal device sends a PDU session modification request message to the AMF entity. The message includes the foregoing information.

For descriptions of the second periodicity information of the service of the terminal device, refer to the foregoing descriptions of the second periodicity information of the service of the terminal device in S409. For brevity, details are not described herein again in this application.

S1004: The AMF entity sends, to an SMF entity, the message including the second periodicity information of the service of the terminal device, the information about the ratio of the size of the frame of high importance to the size of the frame of low importance in the service, and the information about the GFBR requirement of the service. Correspondingly, the SMF entity receives, from the AMF entity, the message including the second periodicity information of the service of the terminal device, the information about the ratio of the size of the frame of high importance to the size of the frame of low importance in the service, and the information about the GFBR requirement of the service.

For example, after receiving, from the terminal device, the message including the second periodicity information of the service of the terminal device, the information about the ratio of the size of the frame of high importance to the size of the frame of low importance in the service, and the information about the GFBR requirement of the service, the AMF entity sends, to the SMF entity, the message including the foregoing information.

For example, the AMF entity sends a PDU session SM context update message to the SMF entity. The message includes the foregoing information.

S1005: The XR server sends, to the SMF entity, the message including the second periodicity information of the service of the terminal device, the information about the ratio of the size of the frame of high importance to the size of the frame of low importance in the service, and the information about the GFBR requirement of the service. Correspondingly, the SMF entity receives, from the XR server, the message including the second periodicity information of the service of the terminal device, the information about the ratio of the size of the frame of high importance to the size of the frame of low importance in the service, and the information about the GFBR requirement of the service.

For example, after determining the requested QoS parameter, the XR server sends, to the SMF entity, the message including the second periodicity information of the service of the terminal device, the information about the ratio of the size of the frame of high importance to the size of the frame of low importance in the service, and the information about the GFBR requirement of the service.

For example, the XR server initiates a modification procedure associated with an SM policy to the SMF entity, and includes information about the foregoing parameter in a request message.

For descriptions of the second periodicity information of the service of the terminal device, refer to the foregoing descriptions of the second periodicity information of the service of the terminal device in S409. For brevity, details are not described herein again in this application.

S1006: The SMF entity determines a message of the first QoS parameter of the first QoS flow, or the first QoS parameter of the first QoS flow and the first QoS parameter of the second QoS flow based on the second periodicity information of the service and layered transmission information of the service.

For example, the SMF entity determines the message of the first QoS parameter of the first QoS flow, or the first QoS parameter of the first QoS flow and the first QoS parameter of the second QoS flow based on the second periodicity information of the service of the terminal device and the layered transmission information of the service.

Specifically, for descriptions of determining, by the SMF, the message of the first QoS parameter of the first QoS flow, or the first QoS parameter of the first QoS flow and the first QoS parameter of the second QoS flow, refer to the descriptions of determining, by the first network device, the first QoS parameter of the first QoS flow, or the first QoS parameter of the first QoS flow and the first QoS parameter of the second QoS flow based on the second periodicity information of the service of the terminal device and the layered transmission information of the service in S409. For brevity, details are not described herein again in this application.

S1007: The SMF entity determines a use mechanism of a QoS flow.

For example, the SMF entity determines the use mechanism of the QoS flow. To be specific, the second QoS flow is used to transmit only data of an (XR) service of the terminal device, or the second QoS flow is used to transmit both data of an (XR) service of the terminal device and data of another service.

S 1008: The SMF entity invokes a service to send a fourth parameter to an AMF entity. Correspondingly, the AMF entity receives, from the SMF entity, the fourth parameter for which the service is invoked.

For example, the SMF entity invokes the service to send the fourth parameter to the AMF entity. The fourth parameter includes the first QoS parameter of the first QoS flow, or the first QoS parameter of the first QoS flow and the first QoS parameter of the second QoS flow, and indicates that there is an association relationship between the first QoS flow and the second QoS flow. Further, the fourth parameter further includes first indication information, and the first indication information indicates whether the data transmitted on the second QoS flow is only data that has an association relationship with the first QoS flow.

A service provided by the AMF entity is Namf_Communication_N1N2MessageTransfer, where an N1 SM container is to be sent by the SMF entity to the terminal device via the AMF entity, N2 SM information is to be sent by the SMF entity to a base station via the AMF entity, and the fourth parameter is included in the N2 SM information. In addition, the N1 SM container is also used to send the parameters of the first QoS flow and the second QoS flow and the association relationship to the terminal device.

Specifically, for descriptions of the fourth parameter and the first indication information, refer to the foregoing descriptions of the fourth parameter and the first indication information in S907. For brevity, details are not described herein again in this application.

S1009: The AMF entity sends an N2 message to the base station. Correspondingly, the base station receives the N2 message from the AMF entity.

For example, after receiving a fourth message sent by the SMF entity, the AMF entity sends the N2 message to the base station. The N2 message includes the first indication information.

S1010: The base station sends an AN message to the terminal device. Correspondingly, the terminal device receives the AN message from the base station.

For example, after receiving the N2 message from the AMF entity, the base station sends the AN message to the terminal device. The AN message includes information about the N1 SM container, that is, information including a session modification instruction.

S1011: The AMF entity sends an N1 message to the terminal device. Correspondingly, the terminal device receives the N1 message from the AMF entity.

For example, after receiving the fourth message sent by the SMF entity, the AMF entity sends the N1 message to the terminal device. The N1 message includes the first indication information.

Specifically, the AMF entity sends the N1 message to the terminal device via the base station.

It should be understood that, in the foregoing solution, S1009 and S1010 are independent solutions of S1011.

S1012: The SMF entity sends an N4 session modification request message to the UPF entity. Correspondingly, the UPF entity receives the N4 session modification request message from the SMF entity.

For example, the SMF entity sends the N4 session modification request message to the UPF entity. The message includes information about the first QoS parameter of the first QoS flow and the first QoS parameter of the second QoS flow and information about the association relationship between the first QoS flow and the second QoS flow.

S1013: The UPF entity sends, to the base station, data that is of the service, that is transmitted on the second QoS flow, and that includes second indication information. Correspondingly, the base station receives, from the UPF entity, the data that is of the service, that is transmitted on the second QoS flow, and that includes the second indication information.

For example, after receiving the N4 session modification request message from the SMF entity, the UPF sends, to the base station, the data that is of the service, that is transmitted on the second QoS flow, and that includes the second indication information, to indicate whether the data has an association relationship with data transmitted on the first QoS flow.

Specifically, for descriptions of the second indication information, refer to the foregoing descriptions of the second indication information in S907. For brevity, details are not described herein again in this application.

Based on the foregoing solution, the terminal device sends the second periodicity information (for example, a frame rate FPS, a configuration of a frame of high importance and a frame of low importance) of the service, information about a frame size ratio, and the information about the GFBR requirement of the service to the SMF entity, so that the SMF entity determines, based on the service requirement, a layering parameter, the GFBR requirement of the service, and the frame rate, a QoS parameter corresponding to each layer, to improve network resource utilization.

Then, the SMF entity sends the first indication information to the base station (a RAN), to indicate whether the data transmitted on the second QoS flow is only data that has an association relationship with the first QoS flow, that is, whether the data transmitted on the second QoS flow is only the data of the (XR) service of the terminal device or the data of the (XR) service and the another service. If yes, the RAN parses whether a header (for example, a GTP-U header) of a data packet subsequently received by using the second QoS flow carries the second indication information. If no, the RAN does not need to parse a header of a data packet subsequently received by using the second QoS flow. The second indication information indicates whether the data packet is a data packet that has an association relationship with a data packet transmitted on the first QoS flow.

In addition, when sending data mapped to the second QoS flow to the RAN, the UPF entity adds the second indication information to a header of a data packet. For example, when the second indication information is 1, it indicates that the data packet is a data packet that has an association relationship with the data packet transmitted on the first QoS flow. When the second indication information is 0, it indicates that the data packet is a data packet that has no association relationship with the data packet transmitted on the first QoS flow.

Therefore, when the terminal device performs a service having a data burst characteristic, for example, the XR service, if an important frame is lost, display of the frame may be affected, for example, long-lasting frame freezing occurs on an image. Based on the foregoing solution, according to a method for improving network resource utilization, service transmission performance is improved, impact of a frame loss caused in a transmission process is reduced, frame freezing time of an image is shortened, and user experience is improved.

It is understood that in the foregoing method embodiments, a method and an operation that are implemented by the terminal device are also implemented by a component (for example, a chip or a circuit) that can be used in the terminal device, and a method and an operation that are implemented by the network device are also implemented by a component (for example, a chip or a circuit) that can be used in the network device.

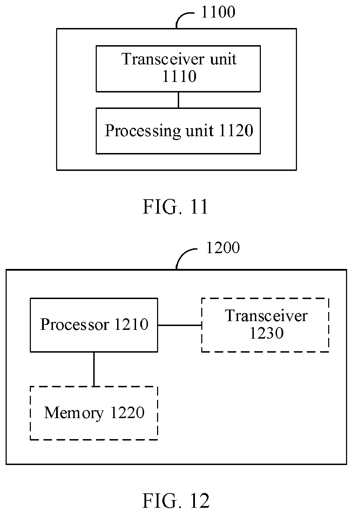

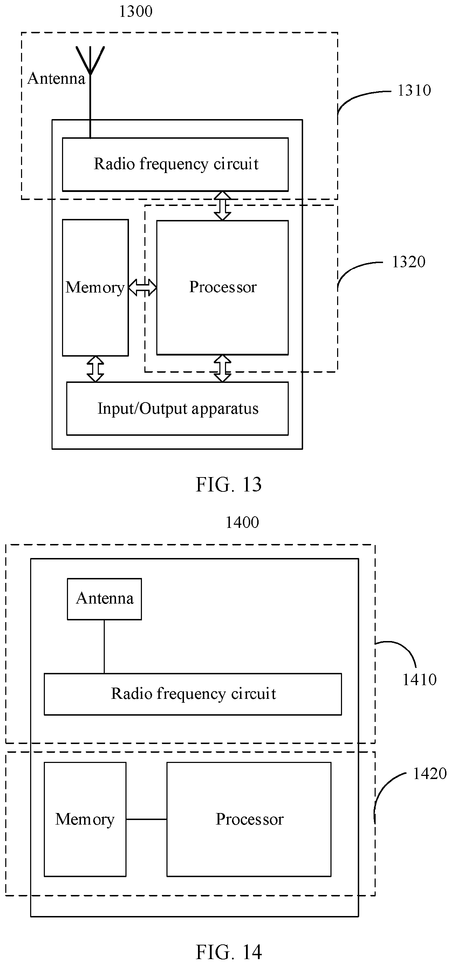

The methods provided in embodiments of this application are described above in detail with reference to FIG. 4A and FIG. 4B to FIG. 10A and FIG. 10B. The following describes in detail communication apparatuses provided in embodiments of this application with reference to FIG. 11 and FIG. 14. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It should be understood that, to implement the foregoing functions, each network element such as a transmitting end device or a receiving end device includes a corresponding hardware structure and/or software module for performing each function. A person skilled in the art should be aware that, in combination with units and algorithm steps in the examples described in the embodiments disclosed in this specification, this application is implemented in a form of hardware or a combination of hardware and computer software. Whether a function is performed by hardware or hardware driven by computer software depends on particular applications and design constraints of the technical solutions. A person skilled in the art uses different methods to implement the described functions for each particular application, but it should not be considered that the implementation goes beyond the scope of this application.

In embodiments of this application, the transmitting end device or the receiving end device is divided into function modules based on the foregoing method examples. For example, each function module is obtained through division based on each corresponding function, and two or more functions are integrated into one processing module. The foregoing integrated module is implemented in a form of hardware, or implemented in a form of a software function module. It should be noted that in embodiments of this application, module division is an example, and is merely logical function division. During actual implementation, another division manner is used. An example in which each function module is obtained through division based on each corresponding function is used below for description.

FIG. 11 is a schematic block diagram of a communication apparatus according to an embodiment of this application. The communication apparatus 1100 includes a transceiver unit 1110 and a processing unit 1120. The transceiver unit 1110 implements a corresponding communication function, and the processing unit 1110 is configured to process data. The transceiver unit 1110 is also referred to as a communication interface or a communication unit.

In some embodiments, the communication apparatus 1100 further includes a storage unit. The storage unit is configured to store instructions and/or data. The processing unit 1120 reads the instructions and/or the data in the storage unit, to enable the communication apparatus to implement the foregoing method embodiments.

The communication apparatus 1100 is configured to perform an action performed by the terminal device in the foregoing method embodiments. In this case, the communication apparatus 1100 is the terminal device or a component that can be disposed in the terminal device. The transceiver unit 1110 is configured to perform receiving and sending related operations on a terminal device side in the foregoing method embodiments. The processing unit 1120 is configured to perform a processing related operation on the terminal device side in the foregoing method embodiments.

Alternatively, the communication apparatus 1100 is configured to perform an action performed by the network device in the foregoing method embodiments. In this case, the communication apparatus 1100 is the network device or a component that can be disposed in the network device. The transceiver unit 1110 is configured to perform receiving and sending related operations on a network device side in the foregoing method embodiments. The processing unit 1120 is configured to perform a processing related operation on the network device side in the foregoing method embodiments.

In a design, the communication apparatus 1100 is configured to perform an action performed by the terminal device in the embodiment shown in FIG. 4A and FIG. 4B, the transceiver unit 1110 is configured to perform S402, S404, S406, S407, S409, S410, S412, and S414, and the processing unit 1120 is configured to perform S401, S405, S408a, and S411.

In an example, the communication apparatus 1100 is configured to perform an action performed by the terminal device in the embodiment shown in FIG. 5, the transceiver unit 1110 is configured to perform S502, and the processing unit 1120 is configured to perform S501.

In another example, the communication apparatus 1100 is configured to perform an action performed by the terminal device in the embodiment shown in FIG. 6A and FIG. 6B, the transceiver unit 1110 is configured to perform S601, S602, S606, S608, S610, and S613, and the processing unit 1120 is configured to perform S607a, S611a, and S614a.

In another example, the communication apparatus 1100 is configured to perform an action performed by the terminal device in the embodiment shown in FIG. 7, the transceiver unit 1110 is configured to perform S701a, S702, and S704, and the processing unit 1120 is configured to perform S705a.

In another example, the communication apparatus 1100 is configured to perform an action performed by the terminal device in the embodiment shown in FIG. 9A and FIG. 9B, the transceiver unit 1110 is configured to perform S901, S903, S909, and S910, and the processing unit 1120 is configured to perform S902a.

In another example, the communication apparatus 1100 is configured to perform an action performed by the terminal device in the embodiment shown in FIG. 10A and FIG. 10B, the transceiver unit 1110 is configured to perform S1001, S1003, S1010, and S1011, and the processing unit 1120 is configured to perform S1002a.

The communication apparatus 1100 may implement a corresponding step or procedure performed by the terminal device in the method 400 and the method 500 according to embodiments of this application. The communication apparatus 1100 includes units configured to perform the methods performed by the terminal device in the method 400 in FIG. 4A and FIG. 4B to the method 1000 in FIG. 10A and FIG. 10B. In addition, the units in the communication apparatus 1100 and the foregoing other operations and/or functions are respectively used to implement corresponding procedures of the method 400 in FIG. 4A and FIG. 4B to the method 1000 in FIG. 10A and FIG. 10B.

It should be understood that a specific process in which the units perform the foregoing corresponding steps is described in detail in the foregoing method embodiments. For brevity, details are not described herein.

In another design, the communication apparatus 1100 is configured to perform an action performed by the first network device in the embodiments shown in FIG. 4A and FIG. 4B, the transceiver unit 1110 is configured to perform S402, S404, S406, S407, S409, S410, S412, and S413, and the processing unit 1120 is configured to perform S403.

In an example, the communication apparatus 1100 is configured to perform an action performed by the first network device in the embodiment shown in FIG. 5, the transceiver unit 1110 is configured to perform S502, and the processing unit 1120 is configured to perform S503.

The communication apparatus 1100 may implement a corresponding step or procedure performed by the first network device in the method 400 and the method 500 according to embodiments of this application. The communication apparatus 1100 includes units configured to perform the methods performed by the first network device in the method 400 in FIG. 4A and FIG. 4B and the method 500 in FIG. 5. In addition, the units in the communication apparatus 1100 and the foregoing other operations and/or functions are respectively used to implement corresponding procedures of the method 400 in FIG. 4A and FIG. 4B and the method 500 in FIG. 5.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

In another design, the communication apparatus 1100 is configured to perform an action performed by the second network device in the embodiment shown in FIG. 4A and FIG. 4B, the transceiver unit 1110 is configured to perform S404, S406, S407, S413, and S414, and the processing unit 1120 is configured to perform S408b.

The communication apparatus 1100 may implement a corresponding step or procedure performed by the second network device in the method 400 according to embodiments of this application. The communication apparatus 1100 includes units configured to perform the method performed by the second network device in the method 400 in FIG. 4A and FIG. 4B. In addition, the units in the communication apparatus 1100 and the foregoing other operations and/or functions are respectively used to implement corresponding procedures of the method in FIG. 4A and FIG. 4B.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

In another design, the communication apparatus 1100 is configured to perform an action performed by the third network device in the embodiment shown in FIG. 4A and FIG. 4B, the transceiver unit 1110 is configured to perform S404, S406, S407, and S413, and the processing unit 1120 is configured to perform S408c.

The communication apparatus 1100 may implement a corresponding step or procedure performed by the third network device in the method 400 according to embodiments of this application. The communication apparatus 1100 includes units configured to perform the method performed by the third network device in the method 400 in FIG. 4A and FIG. 4B. In addition, the units in the communication apparatus 1100 and the foregoing other operations and/or functions are respectively used to implement corresponding procedures of the method in FIG. 4A and FIG. 4B.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

In another design, the communication apparatus 1100 is configured to perform an action performed by the SMF entity in the embodiment shown in FIG. 6A and FIG. 6B, the transceiver unit 1110 is configured to perform S601, S603, S604, S606, S608, S610, and S612, and the processing unit 1120 is configured to perform S605 and S609.

In an example, the communication apparatus 1100 is configured to perform an action performed by the SMF entity in the embodiment shown in FIG. 7, the transceiver unit 1110 is configured to perform S702 and S704, and the processing unit 1120 is configured to perform S703.

In another example, the communication apparatus 1100 is configured to perform an action performed by the SMF entity in the embodiment shown in FIG. 9A and FIG. 9B, the transceiver unit 1110 is configured to perform S901, S904, S905, S907, and S911, and the processing unit 1120 is configured to perform S906.

In another example, the communication apparatus 1100 is configured to perform an action performed by the SMF entity in the embodiment shown in FIG. 10A and FIG. 10B, the transceiver unit 1110 is configured to S1001, S1004, S1005, S1008, and S1012, and the processing unit 1120 is configured to perform S1006 and S1007.

The communication apparatus 1100 may implement a corresponding step or procedure performed by the SMF entity in the method 600, the method 700, the method 900, and the method 1000 according to embodiments of this application. The communication apparatus 1100 includes units configured to perform the methods performed by the SMF entity in the method 600 in FIG. 6A and FIG. 6B, the method 700 in FIG. 7, the method 900 in FIG. 9A and FIG. 9B, and the method 1000 in FIG. 10A and FIG. 10B. In addition, the units in the communication apparatus 1100 and the foregoing other operations and/or functions are respectively used to implement corresponding procedures of the method 600 in FIG. 6A and FIG. 6B, the method 700 in FIG. 7, the method 900 in FIG. 9A and FIG. 9B, and the method 1000 in FIG. 10A and FIG. 10B.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

In another design, the communication apparatus 1100 is configured to perform an action performed by the UPF entity in the embodiment shown in FIG. 6A and FIG. 6B, the transceiver unit 1110 is configured to perform S606, S608, S610, and S612, and the processing unit 1120 is configured to perform S607c, S611c, and S614c.

In an example, the communication apparatus 1100 is configured to perform an action performed by the UPF entity in the embodiment shown in FIG. 7, the transceiver unit 1110 is configured to perform S702 and S704, and the processing unit 1120 is configured to perform S705c.

In another example, the communication apparatus 1100 is configured to perform an action performed by the UPF entity in the embodiment shown in FIG. 9A and FIG. 9B, and the transceiver unit 1110 is configured to perform S911 and S912.

In another example, the communication apparatus 1100 is configured to perform an action performed by the UPF entity in the embodiment shown in FIG. 10A and FIG. 10B, and the transceiver unit 1110 is configured to perform S1012 and S1013.

The communication apparatus 1100 may implement a corresponding step or procedure performed by the UPF entity in the method 600, the method 700, the method 900, and the method 1000 according to embodiments of this application. The communication apparatus 1100 includes units configured to perform the methods performed by the UPF entity in the method 600 in FIG. 6A and FIG. 6B, the method 700 in FIG. 7, the method 900 in FIG. 9A and FIG. 9B, and the method 1000 in FIG. 10A and FIG. 10B. In addition, the units in the communication apparatus 1100 and the foregoing other operations and/or functions are respectively used to implement corresponding procedures of the method 600 in FIG. 6A and FIG. 6B, the method 700 in FIG. 7, the method 900 in FIG. 9A and FIG. 9B, and the method 1000 in FIG. 10A and FIG. 10B.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

The communication apparatus 1100 may implement a corresponding step or procedure performed by the base station in the method 600, the method 700, the method 900, and the method 1000 according to embodiments of this application. The communication apparatus 1100 includes units configured to perform the methods performed by the base station in the method 600 in FIG. 6A and FIG. 6B, the method 700 in FIG. 7, the method 900 in FIG. 9A and FIG. 9B, and the method 1000 in FIG. 10A and FIG. 10B. In addition, the units in the communication apparatus 1100 and the foregoing other operations and/or functions are respectively used to implement corresponding procedures of the method 600 in FIG. 6A and FIG. 6B, the method 700 in FIG. 7, the method 900 in FIG. 9A and FIG. 9B, and the method 1000 in FIG. 10A and FIG. 10B.

The processing unit 1120 in the foregoing embodiment is implemented by at least one processor or a processor-related circuit. The transceiver unit 1110 is implemented by a transceiver or a transceiver-related circuit. The transceiver unit 1110 may also be referred to as a communication unit or a communication interface. The storage unit is implemented by at least one memory.

It should be understood that a specific process in which the units perform the foregoing corresponding steps is described in detail in the foregoing method embodiments. For brevity, details are not described herein.

As shown in FIG. 12, an embodiment of this application further provides a communication apparatus 1200. The communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, to perform the method in the foregoing method embodiments.

In some embodiments, the communication apparatus 1200 includes one or more processors 1210.

In some embodiments, as shown in FIG. 12, the communication apparatus 1200 further includes the memory 1220.

In some embodiments, the communication apparatus 1200 includes one or more memories 1220.

In some embodiments, the memory 1220 and the processor 1210 are integrated together, or are disposed separately.

In some embodiments, as shown in FIG. 12, the communication apparatus 1200 further includes a transceiver 1230. The transceiver 1230 is configured to receive and/or send a signal. For example, the processor 1210 is configured to control the transceiver 1230 to receive and/or send the signal.

In a solution, the communication apparatus 1200 is configured to perform an operation performed by the terminal device in the foregoing method embodiments.

For example, the processor 1210 is configured to implement a processing related operation performed by the terminal device in the foregoing method embodiments, and the transceiver 1230 is configured to implement receiving and sending related operations performed by the terminal device in the foregoing method embodiments.

In another solution, the communication apparatus 1200 is configured to implement an operation performed by the first network device in the foregoing method embodiments.

For example, the processor 1210 is configured to implement a processing related operation performed by the first network device in the foregoing method embodiments, and the transceiver 1230 is configured to implement receiving and sending related operations performed by the network device in the foregoing method embodiments.

In another solution, the communication apparatus 1200 is configured to implement an operation performed by the second network device in the foregoing method embodiments.

For example, the processor 1210 is configured to implement a processing related operation performed by the second network device in the foregoing method embodiments, and the transceiver 1230 is configured to implement receiving and sending related operations performed by the network device in the foregoing method embodiments.

In another solution, the communication apparatus 1200 is configured to implement an operation performed by the SMF entity in the foregoing method embodiments.

For example, the processor 1210 is configured to implement a processing related operation performed by the SMF entity in the foregoing method embodiments, and the transceiver 1230 is configured to implement receiving and sending related operations performed by the network device in the foregoing method embodiments.

In another solution, the communication apparatus 1200 is configured to implement an operation performed by the UPF entity in the foregoing method embodiments.

For example, the processor 1210 is configured to implement a processing related operation performed by the UPF entity in the foregoing method embodiments, and the transceiver 1230 is configured to implement receiving and sending related operations performed by the network device in the foregoing method embodiments.

In another solution, the communication apparatus 1200 is configured to implement an operation performed by the base station in the foregoing method embodiments.

For example, the processor 1210 is configured to implement a processing related operation performed by the base station in the foregoing method embodiments, and the transceiver 1230 is configured to implement receiving and sending related operations performed by the network device in the foregoing method embodiments.

An embodiment of this application further provides a communication apparatus 1300. The communication apparatus 1300 is a terminal device or a chip. The communication apparatus 1300 is configured to perform an operation performed by the terminal device in the foregoing method embodiments.

When the communication apparatus 1300 is the terminal device, FIG. 13 is a simplified schematic diagram of a structure of the terminal device. As shown in FIG. 13, the terminal device includes a processor, a memory, a radio frequency circuit, an antenna, and an input/output apparatus. The processor is mainly configured to: process a communication protocol and communication data, control the terminal device, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user. It should be noted that some types of terminal devices do not have an input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into the data, and processes the data. For ease of description, FIG. 13 shows only one memory and one processor. In an actual terminal device product, there are one or more processors and one or more memories. The memory is also referred to as a storage medium or a storage device. The memory is disposed independently of the processor, or is integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 13, the terminal device includes a transceiver unit 1310 and a processing unit 1320. The transceiver unit 1310 is also referred to as a transceiver, a transceiver, or a transceiver apparatus. The processing unit 1320 is also referred to as a processor, a processing board, a processing module, or a processing apparatus.

In some embodiments, a component that is in the transceiver unit 1310 and that is configured to implement a receiving function is considered as a receiving unit, and a component that is in the transceiver unit 1310 and that is configured to implement a sending function is considered as a sending unit. In other words, the transceiver unit 1310 includes the receiving unit and the sending unit. The transceiver unit is sometimes also referred to as a transceiver, a transceiver, or a transceiver circuit. The receiving unit is sometimes also referred to as a receiver, a receiver, or a receiver circuit. The sending unit is sometimes also referred to as a transmitter, a transmitter, or a transmitter circuit.

For example, the processing unit 1320 is configured to perform a processing action on a terminal device side in FIG. 4A and FIG. 4B to FIG. 10A and FIG. 10B. For example, the processing unit 1320 is configured to perform processing steps in FIG. 4A and FIG. 4B to FIG. 10A and FIG. 10B, and the transceiver unit 1310 is configured to perform receiving and sending operations in FIG. 4A and FIG. 4B to FIG. 10A and FIG. 10B.

It should be understood that FIG. 13 is merely an example rather than a limitation, and the terminal device including the transceiver unit and the processing unit does not depend on the structure shown in FIG. 13.

When the communication apparatus 1300 is the chip, the chip includes a transceiver unit and a processing unit. The transceiver unit is an input/output circuit or a communication interface. The processing unit is a processor, a microprocessor, or an integrated circuit that is integrated onto the chip.

An embodiment of this application further provides a communication apparatus 1400. The communication apparatus 1400 is a network device or a chip. The communication apparatus 1400 is configured to perform an operation performed by the first network device, the second network device, the third network device, the SMF entity, the UPF entity, or the base station in the foregoing method embodiments.

When the communication apparatus 1400 is the network device, FIG. 14 is a simplified schematic diagram of a structure of the network device 1400. The network device 1400 includes a part 1410 and a part 1420. The part 1410 is mainly configured to: receive and send a radio frequency signal and perform conversion between the radio frequency signal and a baseband signal. The part 1420 is mainly configured to perform processing and control. The part 1410 is usually referred to as a transceiver unit, a transceiver, a transceiver circuit, or a transceiver. The part 1420 is usually a control center of the network device, is usually referred to as a processing unit, and is configured to control the network device to perform a processing operation on a network device side in the foregoing method embodiments.

The transceiver unit in the part 1410 is also referred to as a transceiver or a transceiver, and includes an antenna and a radio frequency circuit. The radio frequency circuit is mainly configured to perform radio frequency processing. In some embodiments, a component that is in the part 1410 and that is configured to implement a receiving function is considered as a receiving unit, and a component configured to implement a sending function is considered as a sending unit. In other words, the part 1410 includes the receiving unit and the sending unit. The receiving unit is also referred to as a receiver, a receiver, or a receiver circuit, and the sending unit is referred to as a transmitter, a transmitter, or a transmitter circuit.

The part 1420 includes one or more boards, and each board includes one or more processors and one or more memories. The processor is configured to read and execute a program in the memory, to implement a baseband processing function and control the base station. If there are a plurality of boards, the boards are interconnected to enhance a processing capability. In an implementation, the plurality of boards share one or more processors, or the plurality of boards share one or more memories, or the plurality of boards share one or more processors at the same time.

For example, in an implementation, the transceiver unit in the part 1410 is configured to perform receiving and sending related steps performed by the first network device in the embodiments shown in FIG. 4A and FIG. 4B and FIG. 5, and the part 1420 is configured to perform a processing related step performed by the first network device in the embodiments shown in FIG. 4A and FIG. 4B and FIG. 5.

For example, in another implementation, the transceiver unit in the part 1410 is configured to perform receiving and sending related steps performed by the second network device in the embodiment shown in FIG. 4A and FIG. 4B, and the part 1420 is configured to perform a processing related step performed by the second network device in the embodiment shown in FIG. 4A and FIG. 4B.

For example, in another implementation, the transceiver unit in the part 1410 is configured to perform receiving and sending related steps performed by the third network device in the embodiment shown in FIG. 4A and FIG. 4B, and the part 1420 is configured to perform a processing related step performed by the third network device in the embodiment shown in FIG. 4A and FIG. 4B.

For example, in another implementation, the transceiver unit in the part 1410 is configured to perform sending and receiving related steps performed by the SMF entity in the embodiments shown in FIG. 6A and FIG. 6B, FIG. 7, FIG. 9A and FIG. 9B, and FIG. 10A and FIG. 10B, and the part 1420 is configured to perform a processing related step performed by the SMF entity in the embodiments shown in FIG. 6A and FIG. 6B, FIG. 7, FIG. 9A and FIG. 9B, and FIG. 10A and FIG. 10B.

For example, in another implementation, the transceiver unit in the part 1410 is configured to perform sending and receiving related steps performed by the UPF entity in the embodiments shown in FIG. 6A and FIG. 6B, FIG. 7, FIG. 9A and FIG. 9B, and FIG. 10A and FIG. 10B, and the part 1420 is configured to perform a processing related step performed by the UPF entity in the embodiments shown in FIG. 6A and FIG. 6B, FIG. 7, FIG. 9A and FIG. 9B, and FIG. 10A and FIG. 10B.

For example, in another implementation, the transceiver unit in the part 1410 is configured to perform receiving and sending related steps performed by the base station in the embodiments shown in FIG. 6A and FIG. 6B, FIG. 7, FIG. 9A and FIG. 9B, and FIG. 10A and FIG. 10B, and the part 1420 is configured to perform a processing related steps performed by the base station in the embodiments shown in FIG. 6A and FIG. 6B, FIG. 7, FIG. 9A and FIG. 9B, and FIG. 10A and FIG. 10B.

It should be understood that FIG. 14 is merely an example rather than a limitation, and the network device including the transceiver unit and the processing unit does not depend on the structure shown in FIG. 14.

When the communication apparatus 1400 is the chip, the chip includes a transceiver unit and a processing unit. The transceiver unit is an input/output circuit or a communication interface. The processing unit is a processor, a microprocessor, or an integrated circuit that is integrated onto the chip.

An embodiment of this application further provides a computer-readable storage medium. The computer-readable storage medium stores computer instructions used to implement the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for convenience and brief description, for explanations and beneficial effects of related content in any communication apparatus provided above, refer to a corresponding method embodiment provided above. Details are not described herein again.

In this embodiment of this application, the terminal device or the network device includes a hardware layer, an operating system layer run on the hardware layer, and an application layer run on the operating system layer. The hardware layer includes a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer includes a browser, an address book, text processing software, and instant messaging software.

A specific structure of an execution body of the method provided in embodiments of this application is not specifically limited in embodiments of this application, provided that a program that records code for the method provided in embodiments of this application can be run to perform communication according to the method provided in embodiments of this application. For example, the method provided in the embodiments of this application is performed by a terminal device or a network device, or a function module that is in the terminal device or the network device and that invokes and executes a program.

Various aspects or features of this application are implemented as a method, an apparatus, or a product that uses standard programming and/or engineering technologies. The term "product" used in this specification covers a computer program that can be accessed from any computer-readable device, carrier, or medium.

The computer-readable storage medium may be any usable medium accessible by the computer, or a data storage device, such as a server or a data center, integrating one or more usable media. The usable medium (or the computer-readable medium) includes, for example but not limited to, a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key driver), a semiconductor medium (for example, a solid state disk (solid state disk, SSD)), a USB flash drive, a read-only memory (read-only memory, ROM), a random access memory (random access memory, RAM), and various media that store program code.

Various storage media described in this specification may indicate one or more devices and/or other machine-readable media that are configured to store information. The term "machine-readable medium" includes but is not limited to: a radio channel and storage, and various other media that include and/or carry instructions and/or data.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor is a microprocessor, or the processor is any conventional processor.

It may be understood that the memory mentioned in embodiments of this application may be a volatile memory or a nonvolatile memory, or may include a volatile memory and a nonvolatile memory. The nonvolatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM). For example, the RAM is used as an external cache. By way of example but limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should further be noted that the memory described in this specification aims to include but is not limited to these memories and any memory of another appropriate type.

In the several embodiments provided in this application, it should be understood that the disclosed apparatus and method are implemented in other manners. For example, the described apparatus embodiment is merely an example. For example, the unit division is merely logical function division and is other division during actual implementation. For example, a plurality of units or components are combined or integrated into another system, or some features are ignored or not performed. In addition, the displayed or discussed mutual couplings or direct couplings or communication connections are implemented by using some interfaces. The indirect couplings or communication connections between the apparatuses or units are implemented in electronic, mechanical, or other forms.

The units described as separate components may or may not be physically separate, and parts displayed as units may be or may not be physical units, may be located at one position, or may be distributed on a plurality of network units. Some or all of the units are selected based on an actual requirement to implement the solutions provided in this application.

In addition, function units in embodiments of this application are integrated into one unit, or each of the units exists alone physically, or two or more units are integrated into one unit.

All or some of the foregoing embodiments are implemented by software, hardware, firmware, or any combination thereof.

When software is used to implement the embodiments, the embodiments may be implemented completely or partially in a form of a computer program product. The computer program product includes one or more computer instructions. When the computer program instructions are loaded and executed on the computer, the procedures or functions according to embodiments of this application are all or partially generated. The computer is a general-purpose computer, a dedicated computer, a computer network, or another programmable apparatus. For example, the computer is a personal computer, a server, or a network device. The computer instructions are stored in a computer-readable storage medium or may be transmitted from a computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and this specification.

Embodiment 1: A session management method includes:
a terminal device determines a first parameter, where the first parameter is used by a first network device to determine first inactivity duration of a first quality of service QoS flow of the terminal device, or is used by the first network device to determine first inactivity duration of a first session of the terminal device; and
the terminal device sends a first message to the first network device, where the first message includes the first parameter.

Embodiment 2: Based on the method according to Embodiment 1,
the first inactivity duration of the first QoS flow is used to determine to release the first QoS flow; or
the first inactivity duration of the first session is used to determine to release a user plane connection of the first session.

Embodiment 3: Based on the method according to Embodiment 1 or 2,
the first parameter is first periodicity information of a service of the terminal device; or
the first parameter is second inactivity duration of the first QoS flow or second inactivity duration of the first session that is determined based on first periodicity information of a service of the terminal device.

Embodiment 4: Based on the method according to Embodiment 3, the first periodicity information of the service of the terminal device includes at least one of information about a first frame rate of the service or information about a first ratio of frames of high importance to frames of low importance in the service.

Embodiment 5: Based on the method according to any one of Embodiments 1 to 4, the method further includes:
the terminal device receives a message that is of the first network device and that includes information about the first inactivity duration of the first QoS flow.

Embodiment 6: Based on the method according to Embodiment 5, the method further includes:
when duration in which there is no data transmission on the first QoS flow reaches the first inactivity duration of the first QoS flow, the terminal device releases the first QoS flow.

Embodiment 7: Based on the method according to Embodiment 5, the method further includes:
when duration in which there is no data transmission on the first QoS flow reaches the first inactivity duration of the first QoS flow, the terminal device sends, to the first network device, a message indicating that the first QoS flow is inactive and/or requesting to release the first QoS flow; and
the terminal device receives from the first network device, a message indicating to release the first QoS flow.

Embodiment 8: Based on the method according to Embodiment 6 or 7, that the terminal device releases the first QoS flow includes:
the terminal device deletes an association relationship between the first QoS flow and a second QoS flow, where the first QoS flow is used to transmit data of high importance in the service, the second QoS flow is used to transmit data of low importance in the service, and there is the association relationship between the first QoS flow and the second QoS flow; or
the terminal device releases a second QoS flow associated with the first QoS flow, where the first QoS flow is used to transmit data of high importance in the service, and the second QoS flow is used to transmit data of low importance in the service.

Embodiment 9: Based on the method according to any one of Embodiments 1 to 8, the method further includes:
the terminal device sends a second message to the first network device.

The second message includes a second parameter, the second parameter is used by the first network device to determine a first QoS parameter of the first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of the first QoS flow and a first QoS parameter of the second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 10: Based on the method according to Embodiment 9, the second parameter or the third parameter is second periodicity information of the service of the terminal device.

Embodiment 11: Based on the method according to Embodiment 9, the method further includes:
the terminal device determines a second QoS parameter of the first QoS flow based on second periodicity information of the service of the terminal device, where the second QoS parameter of the first QoS flow is the second parameter, and the second QoS parameter of the first QoS flow includes at least one of a second GFBR, a second MFBR, or a second MDBV of the first QoS flow; or
the terminal device determines a second QoS parameter of the first QoS flow and a second QoS parameter of the second QoS flow based on second periodicity information of the service of the terminal device, where information about the second QoS parameter of the first QoS flow and the second QoS parameter of the second QoS flow are the third parameter, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 12: Based on the method according to Embodiment 10 or 11, the second periodicity information of the service of the terminal device includes at least one of information about a second frame rate of the service or information about a second ratio of frames of high importance to frames of low importance in the service.

Embodiment 13: Based on the method according to any one of Embodiments 1 to 4, the method further includes:
the terminal device receives a message that is of the first network device and that includes information about the first inactivity duration of the first session.

Embodiment 14: Based on the method according to Embodiment 13, the method further includes:
when duration in which there is no data transmission on the first session reaches the first inactivity duration of the first session, the terminal device deactivates the user plane connection of the first session.

Embodiment 15: Based on the method according to Embodiment 13, the method further includes:
when duration in which there is no data transmission on the first session reaches the first inactivity duration of the first session, the terminal device sends, to the first network device, a message indicating that the first session is inactive and/or requesting to deactivate the user plane connection of the first session; and
the terminal device receives, from a second network device, a message indicating to deactivate the user plane connection of the first session.

Embodiment 16: A session management method includes:
a first network device receives a first message from a terminal device, where the first message includes a first parameter, and the first parameter is used by the first network device to determine first inactivity duration of a first quality of service QoS flow of the terminal device, or is used by the first network device to determine first inactivity duration of a first session of the terminal device; and
the first network device determines the first inactivity duration of the first QoS flow or the first inactivity duration of the first session based on the first parameter.

Embodiment 17: Based on the method according to Embodiment 16,
the first inactivity duration of the first QoS flow is used to determine to release the first QoS flow; or
the first inactivity duration of the first session is used to determine to release a user plane connection of the first session.

Embodiment 18: Based on the method according to Embodiment 16 or 17,
the first parameter is first periodicity information of a service of the terminal device; or
the first parameter is second inactivity duration of the first QoS flow or second inactivity duration of the first session that is determined based on first periodicity information of a service of the terminal device.

Embodiment 19: Based on the method according to Embodiment 18, the first periodicity information of the service of the terminal device includes at least one of information about a first frame rate of the service or information about a first ratio of frames of high importance to frames of low importance in the service.

Embodiment 20: Based on the method according to any one of Embodiments 16 to 19, the method further includes:
the first network device sends, to the terminal device and/or a second network device and/or a third network device, a message including information about the first inactivity duration of the first QoS flow.

Embodiment 21: Based on the method according to Embodiment 20, the method further includes:
the first network device receives, from the terminal device and/or the second network device and/or the third network device, a message indicating that the first QoS flow is inactive and/or requesting to release the first QoS flow; and
the first network device sends, to the terminal device and/or the second network device and/or the third network device, a message indicating to release the first QoS flow.

Embodiment 22: Based on the method according to any one of Embodiments 16 to 21, the method further includes:
the first network device receives a second message from the terminal device.

The second message includes a second parameter, the second parameter is used by the first network device to determine a first QoS parameter of the first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of the first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 23: Based on the method according to Embodiment 22, the second parameter or the third parameter is second periodicity information of the service of the terminal device.

Embodiment 24: Based on the method according to Embodiment 22,
the second parameter is a second QoS parameter of the first QoS flow, the second QoS parameter of the first QoS flow is determined by the terminal device based on the second periodicity information of the service of the terminal device, and the second QoS parameter of the first QoS flow includes at least one of a second GFBR, a second MFBR, or a second MDBV of the first QoS flow; or
the third parameter is information about a second QoS parameter of the first QoS flow and a second QoS parameter of the second QoS flow, the second QoS parameter of the first QoS flow and the second QoS parameter of the second QoS flow are determined by the terminal device based on the second periodicity information of the service of the terminal device, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 25: Based on the method according to Embodiment 23 or 24, the second periodicity information of the service of the terminal device includes at least one of information about a second frame rate of the service or information about a second ratio of frames of high importance to frames of low importance in the service.

Embodiment 26: Based on the method according to any one of Embodiments 16 to 19, the method further includes:
the first network device sends, to the terminal device, a message including the first inactivity duration information of the first session.

Embodiment 27: Based on the method according to Embodiment 26, the method further includes:
the first network device receives, from the terminal device, a message indicating that the first session is inactive and/or requesting to deactivate the user plane connection of the first session; and
the first network device sends, to the second network device and/or the third network device, a message indicating to deactivate the user plane connection of the first session.

Embodiment 28: Based on the method according to any one of Embodiments 16 to 27, the method further includes:
the second network device receives, from the first network device, a message including information about the first inactivity duration of the first QoS flow.

Embodiment 29: According to the method in Embodiment 28, the method further includes:
when duration in which there is no data transmission on the first QoS flow reaches the first inactivity duration of the first QoS flow, the second network device sends, to the first network device, a message indicating that the first QoS flow is inactive and/or requesting to release the first QoS flow; and
the second network device receives, from the first network device, a message indicating to release the first QoS flow.

Embodiment 30: Based on the method according to Embodiment 29, that the second network device releases the first QoS flow includes:
the second network device deletes an association relationship between the first QoS flow and the second QoS flow, where the first QoS flow is used to transmit data of high importance in the service, the second QoS flow is used to transmit data of low importance in the service, and there is the association relationship between the first QoS flow and the second QoS flow; or
the second network device releases the second QoS flow associated with the first QoS flow, where the first QoS flow is used to transmit data of high importance in the service, and the second QoS flow is used to transmit data of low importance in the service.

Embodiment 31: Based on the method according to Embodiments 16 to 30, the method further includes:
the second network device receives, from the first network device, a message indicating to deactivate the user plane connection of the first session; and
the second network device sends, to the terminal device, a message indicating to deactivate the user plane connection of the first session.

Embodiment 32: Based on the method according to any one of Embodiments 16 to 31, the method further includes:
the third network device receives, from the first network device, a message including information about the first inactivity duration of the first QoS flow.

Embodiment 33: Based on the method according to Embodiment 32, the method further includes:
when duration in which there is no data transmission on the first QoS flow reaches the first inactivity duration of the first QoS flow, the third network device sends, to the first network device, a message indicating that the first QoS flow is inactive and/or requesting to release the first QoS flow;
the third network device receives, from the first network device, a message indicating to release the first QoS flow.

Embodiment 34: Based on the method according to Embodiment 33, that the third network device releases the first QoS flow includes:
the third network device deletes the association relationship between the first QoS flow and the second QoS flow, where the first QoS flow is used to transmit the data of high importance in the service, the second QoS flow is used to transmit the data of low importance in the service, and there is the association relationship between the first QoS flow and the second QoS flow; or
the third network device releases the second QoS flow associated with the first QoS flow, where the first QoS flow is used to transmit the data of high importance in the service, and the second QoS flow is used to transmit the data of low importance in the service.

Embodiment 35: Based on the method according to Embodiments 16 to 34, the method further includes:
the third network device receives, from the first network device, a message indicating to deactivate the user plane connection of the first session.

Embodiment 36: A session management method includes:
a terminal device sends a second message to a first network device.

The second message includes a second parameter, the second parameter is used by the first network device to determine a first QoS parameter of a first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of a first QoS flow and a first QoS parameter of the second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 37: Based on the method according to Embodiment 36, the second parameter or the third parameter is second periodicity information of a service of the terminal device.

Embodiment 38: Based on the method according to Embodiment 36, the method further includes:
the terminal device determines a second QoS parameter of the first QoS flow based on second periodicity information of a service of the terminal device, where the second QoS parameter of the first QoS flow is the second parameter, and the second QoS parameter of the first QoS flow includes at least one of a second GFBR, a second MFBR, or a second MDBV of the first QoS flow; or
the terminal device determines a second QoS parameter of the first QoS flow and a second QoS parameter of the second QoS flow based on second periodicity information of a service of the terminal device, where information about the second QoS parameter of the first QoS flow and the second QoS parameter of the second QoS flow are the third parameter, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 39: Based on the method according to Embodiment 37 or 38, the second periodicity information of the service of the terminal device includes at least one of information about a second frame rate of the service or information about a second ratio of frames of high importance to frames of low importance in the service.

Embodiment 40: A session management method includes:
a first network device receives a second message from a terminal device.

The second message includes a second parameter, the second parameter is used by the first network device to determine a first QoS parameter of a first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of the first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 41: Based on the method according to Embodiment 40, the second parameter or the third parameter is second periodicity information of a service of the terminal device.

Embodiment 42: Based on the method according to Embodiment 40, the method further includes:
the second parameter is a second QoS parameter of the first QoS flow, the second QoS parameter of the first QoS flow is determined by the terminal device based on second periodicity information of a service of the terminal device, and the second QoS parameter of the first QoS flow includes at least one of a second GFBR, a second MFBR, or a second MDBV of the first QoS flow; or
the third parameter is information about a second QoS parameter of the first QoS flow and a second QoS parameter of the second QoS flow, the second QoS parameter of the first QoS flow and the second QoS parameter of the second QoS flow are determined by the terminal device based on second periodicity information of a service of the terminal device, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 43: Based on the method according to Embodiment 41 or 42, the second periodicity information of the service of the terminal device includes at least one of information about a second frame rate of the service or information about a second ratio of frames of high importance to frames of low importance in the service.

Embodiment 44: A session management method includes:
a third network device receives, from a first network device, a message including information about first inactivity duration of a first QoS flow.

Embodiment 45: Based on the method according to Embodiment 44, the method further includes:
when duration in which there is no data transmission on the first QoS flow reaches the first inactivity duration of the first QoS flow, the third network device sends, to the first network device, a message indicating that the first QoS flow is inactive and/or requesting to release the first QoS flow; and
the third network device receives, from the first network device, a message indicating to release the first QoS flow.

Embodiment 46: Based on the method according to Embodiment 45, that the third network device releases the first QoS flow includes:
the third network device deletes an association relationship between the first QoS flow and a second QoS flow, where the first QoS flow is used to transmit data of high importance in a service, the second QoS flow is used to transmit data of low importance in the service, and there is the association relationship between the first QoS flow and the second QoS flow; or
the third network device releases a second QoS flow associated with the first QoS flow, where the first QoS flow is used to transmit data of high importance in a service, and the second QoS flow is used to transmit data of low importance in the service.

Embodiment 47: Based on the method according to any one of Embodiments 44 to 46, the method further includes:
the third network device receives, from the first network device, a message indicating to deactivate a user plane connection of a first session.

Embodiment 48: A session management apparatus includes:
a processing unit, configured to determine a first parameter, where the first parameter is used by a first network device to determine first inactivity duration of a first quality of service QoS flow of the terminal device, or is used by the first network device to determine first inactivity duration of a first session of the terminal device; and
a transceiver unit, configured to send a first message to the first network device, where the first message includes the first parameter.

Embodiment 49: Based on the apparatus according to Embodiment 48,
the first inactivity duration of the first QoS flow is used to determine to release the first QoS flow; or
the first inactivity duration of the first session is used to determine to release a user plane connection of the first session.

Embodiment 50: Based on the apparatus according to Embodiment 48 or 49,
the first parameter is first periodicity information of a service of the terminal device; or
the first parameter is second inactivity duration of the first QoS flow or second inactivity duration of the first session that is determined based on first periodicity information of a service of the terminal device.

Embodiment 51: Based on the apparatus according to Embodiment 50, the first periodicity information of the service of the terminal device includes at least one of information about a first frame rate of the service or information about a first ratio of frames of high importance to frames of low importance in the service.

Embodiment 52: Based on the apparatus according to any one of Embodiments 48 to 51, the transceiver unit is further configured to:
receive a message that is of the first network device and that includes information about the first inactivity duration of the first QoS flow.

Embodiment 53: Based on the apparatus according to Embodiment 52, the processing unit is further configured to:
when duration in which there is no data transmission on the first QoS flow reaches the first inactivity duration of the first QoS flow, release, by the terminal device, the first QoS flow.

Embodiment 54: Based on the apparatus according to Embodiment 52, the transceiver unit is further configured to:
when duration in which there is no data transmission on the first QoS flow reaches the first inactivity duration of the first QoS flow, send, by the terminal device to the first network device, a message indicating that the first QoS flow is inactive and/or requesting to release the first QoS flow; and
receive, by the terminal device from the first network device, a message indicating to release the first QoS flow.

Embodiment 55: Based on the apparatus according to Embodiment 53 or 54, the processing unit is further configured to:
delete an association relationship between the first QoS flow and a second QoS flow, where the first QoS flow is used to transmit data of high importance in the service, the second QoS flow is used to transmit data of low importance in the service, and there is the association relationship between the first QoS flow and the second QoS flow; or
release a second QoS flow associated with the first QoS flow, where the first QoS flow is used to transmit data of high importance in the service, and the second QoS flow is used to transmit data of low importance in the service.

Embodiment 56: Based on the apparatus according to any one of Embodiments 48 to 55, the transceiver unit is further configured to:
send a second message to the first network device.

The second message includes a second parameter, the second parameter is used by the first network device to determine a first QoS parameter of the first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of the first QoS flow and a first QoS parameter of the second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 57: Based on the apparatus according to Embodiment 56, the second parameter or the third parameter is second periodicity information of the service of the terminal device.

Embodiment 58: Based on the apparatus according to Embodiment 56, the processing unit is further configured to:
determine a second QoS parameter of the first QoS flow based on second periodicity information of the service of the terminal device, where the second QoS parameter of the first QoS flow is the second parameter, and the second QoS parameter of the first QoS flow includes at least one of a second GFBR, a second MFBR, or a second MDBV of the first QoS flow; or
determine a second QoS parameter of the first QoS flow and a second QoS parameter of the second QoS flow based on second periodicity information of the service of the terminal device, where information about the second QoS parameter of the first QoS flow and the second QoS parameter of the second QoS flow are the third parameter, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 59: Based on the apparatus according to Embodiment 57 or 58, the second periodicity information of the service of the terminal device includes at least one of information about a second frame rate of the service or information about a second ratio of frames of high importance to frames of low importance in the service.

Embodiment 60: Based on the apparatus according to any one of Embodiments 48 to 51, the transceiver unit is further configured to:
receive a message that is of the first network device and that includes information about the first inactivity duration of the first session.

Embodiment 61: Based on the apparatus according to Embodiment 60, the processing unit is further configured to:
when duration in which there is no data transmission on the first session reaches the first inactivity duration of the first session, deactivate the user plane connection of the first session.

Embodiment 62: Based on the apparatus according to Embodiment 60, the transceiver unit is further configured to:
when duration in which there is no data transmission on the first session reaches the first inactivity duration of the first session, send, to the first network device, a message indicating that the first session is inactive and/or requesting to deactivate the user plane connection of the first session; and
receive, from a second network device, a message indicating to deactivate the user plane connection of the first session.

Embodiment 63: A session management apparatus includes:
a transceiver unit of a first network device, configured to receive a first message from a terminal device, where the first message includes a first parameter, and the first parameter is used by the first network device to determine first inactivity duration of a first quality of service QoS flow of the terminal device, or is used by the first network device to determine first inactivity duration of a first session of the terminal device; and
a processing unit of the first network device, configured to determine the first inactivity duration of the first QoS flow or the first inactivity duration of the first session based on the first parameter.

Embodiment 64: Based on the apparatus according to Embodiment 63,
the first inactivity duration of the first QoS flow is used to determine to release the first QoS flow; or
the first inactivity duration of the first session is used to determine to release a user plane connection of the first session.

Embodiment 65: Based on the apparatus according to Embodiment 63 or 64,
the first parameter is first periodicity information of a service of the terminal device; or
the first parameter is second inactivity duration of the first QoS flow or second inactivity duration of the first session that is determined based on first periodicity information of a service of the terminal device.

Embodiment 66: Based on the apparatus according to Embodiment 65, the first periodicity information of the service of the terminal device includes at least one of information about a first frame rate of the service or information about a first ratio of frames of high importance to frames of low importance in the service.

Embodiment 67: Based on the apparatus according to any one of Embodiments 63 to 66, the transceiver unit of the first network device is further configured to:
send, to the terminal device and/or a second network device and/or a third network device, a message including information about the first inactivity duration of the first QoS flow.

Embodiment 68: Based on the apparatus according to Embodiment 67, the transceiver unit of the first network device is further configured to:
receive, from the terminal device and/or the second network device and/or the third network device, a message indicating that the first QoS flow is inactive and/or requesting to release the first QoS flow; and
send, to the terminal device and/or the second network device and/or the third network device, a message indicating to release the first QoS flow.

Embodiment 69: Based on the apparatus according to any one of Embodiments 63 to 67, the transceiver unit of the first network device is further configured to:
receive a second message from the terminal device.

The second message includes a second parameter, the second parameter is used by the first network device to determine a first QoS parameter of the first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of the first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow.

Embodiment 70: Based on the apparatus according to Embodiment 69, the second parameter or the third parameter is second periodicity information of the service of the terminal device.

Embodiment 71: Based on the apparatus according to Embodiment 69,
the second parameter is a second QoS parameter of the first QoS flow, the second QoS parameter of the first QoS flow is determined by the terminal device based on second periodicity information of the service of the terminal device, and the second QoS parameter of the first QoS flow includes at least one of a second GFBR, a second MFBR, or a second MDBV of the first QoS flow; or
the third parameter is information about a second QoS parameter of the first QoS flow and a second QoS parameter of a second QoS flow, the second QoS parameter of the first QoS flow and the second QoS parameter of the second QoS flow are determined by the terminal device based on second periodicity information of the service of the terminal device, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 72: Based on the apparatus according to Embodiment 70 or 71, the second periodicity information of the service of the terminal device includes at least one of information about a second frame rate of the service or information about a second ratio of frames of high importance to frames of low importance in the service.

Embodiment 73: Based on the apparatus according to any one of Embodiments 63 to 66, the transceiver unit of the first network device is further configured to:
send, to the terminal device, a message including information about the first inactivity duration of the first session.

Embodiment 74: Based on the apparatus according to Embodiment 73, the transceiver unit of the first network device is further configured to:
receive, from the terminal device, a message indicating that the first session is inactive and/or requesting to deactivate the user plane connection of the first session; and
send, to the second network device and/or the third network device, a message indicating to deactivate the user plane connection of the first session.

Embodiment 75: Based on the apparatus according to any one of Embodiments 63 to 74, the apparatus further includes:
a transceiver unit of the second network device, configured to receive, from the first network device, a message including information about the first inactivity duration of the first QoS flow.

Embodiment 76: Based on the apparatus according to Embodiment 75, the transceiver unit of the second network device is further configured to:
when duration in which there is no data transmission on the first QoS flow reaches the first inactivity duration of the first QoS flow, send, to the first network device, a message indicating that the first QoS flow is inactive and/or requesting to release the first QoS flow; and
receive, from the first network device, a message indicating to release the first QoS flow.

Embodiment 77: Based on the apparatus according to Embodiment 76, the apparatus further includes:
a processing unit of the second network device, configured to delete an association relationship between the first QoS flow and the second QoS flow, where the first QoS flow is used to transmit data of high importance in the service, the second QoS flow is used to transmit data of low importance in the service, and there is the association relationship between the first QoS flow and the second QoS flow; or
release the second QoS flow associated with the first QoS flow, where the first QoS flow is used to transmit data of high importance in the service, and the second QoS flow is used to transmit data of low importance in the service.

Embodiment 78: Based on the apparatus according to Embodiments 63 to 77, the transceiver unit of the second network device is further configured to:
receive, from the first network device, a message indicating to deactivate the user plane connection of the first session; and
send, to the terminal device, a message indicating to deactivate the user plane connection of the first session.

Embodiment 79: Based on the apparatus according to any one of Embodiments 63 to 77, the apparatus further includes:
a transceiver unit of the third network device, configured to receive, from the first network device, a message including information about the first inactivity duration of the first QoS flow.

Embodiment 80: Based on the apparatus according to Embodiment 79, the transceiver unit of the third network device is further configured to:
when duration in which there is no data transmission on the first QoS flow reaches the first inactivity duration of the first QoS flow, send, to the first network device, a message indicating that the first QoS flow is inactive and/or requesting to release the first QoS flow; and
receive, from the first network device, a message indicating to release the first QoS flow.

Embodiment 81: Based on the apparatus according to Embodiment 80, the apparatus further includes:
a processing unit of the third network device, configured to: delete an association relationship between the first QoS flow and the second QoS flow, where the first QoS flow is used to transmit data of high importance in the service, the second QoS flow is used to transmit data of low importance in the service, and there is the association relationship between the first QoS flow and the second QoS flow; or
release the second QoS flow associated with the first QoS flow, where the first QoS flow is used to transmit data of high importance in the service, and the second QoS flow is used to transmit data of low importance in the service.

Embodiment 82: Based on the apparatus according to Embodiments 63 to 81, the transceiver unit of the third network device is further configured to:
receive, from the first network device, a message indicating to deactivate the user plane connection of the first session.

Embodiment 83: A session management apparatus includes:
a processing unit, configured to generate a second message, where the second message includes a second parameter, the second parameter is used by the first network device to determine a first QoS parameter of a first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by the first network device to determine a first QoS parameter of a first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow; and
a transceiver unit, configured to send the second message to a first network device.

Embodiment 84: Based on the apparatus according to Embodiment 83, the second parameter or the third parameter is second periodicity information of a service of the terminal device.

Embodiment 85: Based on the apparatus according to Embodiment 83, the apparatus further includes:
the terminal device determines a second QoS parameter of the first QoS flow based on second periodicity information of the service of the terminal device, where the second QoS parameter of the first QoS flow is the second parameter, and the second QoS parameter of the first QoS flow includes at least one of a second GFBR, a second MFBR, or a second MDBV of the first QoS flow; or
the terminal device determines a second QoS parameter of the first QoS flow and a second QoS parameter of the second QoS flow based on second periodicity information of the service of the terminal device, where information about the second QoS parameter of the first QoS flow and the second QoS parameter of the second QoS flow are the third parameter, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 86: Based on the apparatus according to Embodiment 84 or 85, the second periodicity information of the service of the terminal device includes at least one of information about a second frame rate of the service or information about a second ratio of frames of high importance to frames of low importance in the service.

Embodiment 87: A session management apparatus includes:
a transceiver unit, configured to receive a second message from a terminal device, where
the second message includes a second parameter, the second parameter is used by a first network device to determine a first QoS parameter of a first QoS flow, and the first QoS parameter of the first QoS flow includes at least one of a first guaranteed flow bit rate GFBR, a first maximum flow bit rate MFBR, or a first maximum data burst volume MDBV of the first QoS flow; or
the second message includes a third parameter, the third parameter is used by a first network device to determine a first QoS parameter of a first QoS flow and a first QoS parameter of a second QoS flow, the first QoS parameter of the first QoS flow includes at least one of a first GFBR, a first MFBR, or a first MDBV of the first QoS flow, and the first QoS parameter of the second QoS flow includes at least one of a first GFBR, a first MFBR, or a first MDBV of the second QoS flow; and
a processing unit, configured to determine the first QoS parameter of the first QoS flow, or determine the first QoS parameter of the first QoS flow and the first QoS parameter of the second QoS flow based on the second message.

Embodiment 88: Based on the apparatus according to Embodiment 87, the second parameter or the third parameter is second periodicity information of a service of the terminal device.

Embodiment 89: Based on the apparatus according to Embodiment 87, the apparatus further includes:
the second parameter is a second QoS parameter of the first QoS flow, the second QoS parameter of the first QoS flow is determined by the terminal device based on second periodicity information of a service of the terminal device, and the second QoS parameter of the first QoS flow includes at least one of a second GFBR, a second MFBR, or a second MDBV of the first QoS flow; or
the third parameter is information about a second QoS parameter of the first QoS flow and a second QoS parameter of the second QoS flow, the second QoS parameter of the first QoS flow and the second QoS parameter of the second QoS flow are determined by the terminal device based on second periodicity information of a service of the terminal device, the second QoS parameter of the first QoS flow includes at least one of a second GFBR, a second MFBR, or a second MDBV of the first QoS flow, and the second QoS parameter of the second QoS flow includes at least one of a second GFBR, a second MFBR, or a second MDBV of the second QoS flow.

Embodiment 90: Based on the apparatus according to Embodiment 88 or 89, the second periodicity information of the service of the terminal device includes at least one of information about a second frame rate of the service or information about a second ratio of frames of high importance to frames of low importance in the service.

Embodiment 91: A session management apparatus includes:
a transceiver unit, configured to receive, from a first network device, a message including information about first inactivity duration of a first QoS flow; and
a processing unit, configured to determine the first inactivity duration of the first QoS flow.

Embodiment 92: Based on the method according to Embodiment 91, the transceiver unit is further configured to:
when duration in which there is no data transmission on the first QoS flow reaches the first inactivity duration of the first QoS flow, send, to the first network device, a message indicating that the first QoS flow is inactive and/or requesting to release the first QoS flow; and
receive, from the first network device, a message indicating to release the first QoS flow.

Embodiment 93: According to the method in Embodiment 92, the apparatus further includes:
a processing unit, configured to: delete an association relationship between the first QoS flow and a second QoS flow, where the first QoS flow is used to transmit data of high importance in a service, the second QoS flow is used to transmit data of low importance in the service, and there is the association relationship between the first QoS flow and the second QoS flow; or
release a second QoS flow associated with the first QoS flow, where the first QoS flow is used to transmit data of high importance in a service, and the second QoS flow is used to transmit data of low importance in the service.

Embodiment 94: Based on the method according to any one of Embodiments 91 to 93, the transceiver unit is further configured to:
receive, from the first network device, a message indicating to deactivate a user plane connection of the first session.

Embodiment 95: A communication apparatus includes
a storage unit, configured to store computer instructions; and
a processing unit, configured to execute the computer instructions stored in the storage unit, to enable the communication apparatus to perform the method according to any one of Embodiments 1 to 15, Embodiments 16 to 35, Embodiments 36 to 39, Embodiments 40 to 43, or Embodiments 44 to 47.

Embodiment 96: A communication apparatus includes:
a memory, configured to store computer instructions; and
a processor, configured to execute the computer instructions stored in the memory, to enable the communication apparatus to perform the method according to any one of Embodiments 1 to 15, Embodiments 16 to 35, Embodiments 36 to 39, Embodiments 40 to 43, or Embodiments 44 to 47.

Embodiment 97: A computer-readable storage medium is provided. The computer-readable storage medium stores a computer program, and when the computer program is executed by a communication apparatus, the communication apparatus is enabled to perform the method according to any one of Embodiments 1 to 15, Embodiments 16 to 35, Embodiments 36 to 39, Embodiments 40 to 43, or Embodiments 44 to 47.

Embodiment 98: A computer program product is provided. The computer program product includes the method according to any one of Embodiments 1 to 15, Embodiments 16 to 35, Embodiments 36 to 39, Embodiments 40 to 43, or Embodiments 44 to 47.

Embodiment 99: A chip is provided. The chip includes a processor and a data interface, and the processor reads, through the data interface, instructions stored in a memory, to perform the method according to Embodiments 1 to 15, Embodiments 16 to 35, Embodiments 36 to 39, Embodiments 40 to 43, or any one of Embodiments 44 to 47.

Embodiment 100: A communication system includes the apparatus according to any one of Embodiments 48 to 62 and Embodiments 63 to 82 or according to any one of Embodiments 83 to 86 and Embodiments 87 to 90.

## Claims

1. A session management method, comprising:
determining, by a terminal device, a first parameter, wherein the first parameter is used by a first network device to determine first inactivity duration of a first quality of service QoS flow of the terminal device, or is used by the first network device to determine first inactivity duration of a first session of the terminal device; and
sending, by the terminal device, a first message to the first network device, wherein the first message comprises the first parameter.

2. The method according to claim 1, wherein
the first inactivity duration of the first QoS flow is used to determine to release the first QoS flow; or
the first inactivity duration of the first session is used to determine to release a user plane connection of the first session.

3. The method according to claim 1 or 2, wherein
the first parameter is first periodicity information of a service of the terminal device; or
the first parameter is second inactivity duration of the first QoS flow or second inactivity duration of the first session that is determined based on first periodicity information of a service of the terminal device.

4. The method according to claim 3, wherein the first periodicity information of the service of the terminal device comprises at least one of information about a first frame rate of the service or information about a first ratio of frames of high importance to frames of low importance in the service.

5. The method according to any one of claims 1 to 4, wherein the method further comprises:
receiving, by the terminal device, a message that is of the first network device and that comprises information about the first inactivity duration of the first QoS flow.

6. The method according to claim 5, wherein the method further comprises:
when duration in which there is no data transmission on the first QoS flow reaches the first inactivity duration of the first QoS flow, releasing, by the terminal device, the first QoS flow.

7. The method according to claim 5, wherein the method further comprises:
when duration in which there is no data transmission on the first QoS flow reaches the first inactivity duration of the first QoS flow, sending, by the terminal device to the first network device, a message indicating that the first QoS flow is inactive and/or requesting to release the first QoS flow; and
receiving, by the terminal device from the first network device, a message indicating to release the first QoS flow.

8. The method according to claim 6 or 7, wherein the releasing, by the terminal device, the first QoS flow comprises:
deleting, by the terminal device, an association relationship between the first QoS flow and a second QoS flow, wherein the first QoS flow is used to transmit data of high importance in the service, the second QoS flow is used to transmit data of low importance in the service, and there is the association relationship between the first QoS flow and the second QoS flow; or
releasing, by the terminal device, a second QoS flow associated with the first QoS flow, wherein the first QoS flow is used to transmit data of high importance in the service, and the second QoS flow is used to transmit data of low importance in the service.

9. The method according to any one of claims 1 to 8, wherein the method further comprises:
sending, by the terminal device, a second message to the first network device, wherein
the second message comprises a second parameter, the second parameter is used by the first network device to determine a first QoS parameter of the first QoS flow, and the first QoS parameter of the first QoS flow comprises at least one of a first guaranteed flow bit rate GFBR, a first maximum flow bit rate MFBR, or a first maximum data burst volume MDBV of the first QoS flow; or
the second message comprises a third parameter, the third parameter is used by the first network device to determine a first QoS parameter of the first QoS flow and a first QoS parameter of the second QoS flow, the first QoS parameter of the first QoS flow comprises at least one of a first GFBR, a first MFBR, or a first MDBV of the first QoS flow, and the first QoS parameter of the second QoS flow comprises at least one of a first GFBR, a first MFBR, or a first MDBV of the second QoS flow.

10. The method according to claim 9, wherein the second parameter or the third parameter is second periodicity information of the service of the terminal device.

11. The method according to claim 9, wherein the method further comprises:
determining, by the terminal device, a second QoS parameter of the first QoS flow based on second periodicity information of the service of the terminal device, wherein the second QoS parameter of the first QoS flow is the second parameter, and the second QoS parameter of the first QoS flow comprises at least one of a second GFBR, a second MFBR, or a second MDBV of the first QoS flow; or
determining, by the terminal device, a second QoS parameter of the first QoS flow and a second QoS parameter of the second QoS flow based on second periodicity information of the service of the terminal device, wherein information about the second QoS parameter of the first QoS flow and the second QoS parameter of the second QoS flow are the third parameter, the second QoS parameter of the first QoS flow comprises at least one of a second GFBR, a second MFBR, or a second MDBV of the first QoS flow, and the second QoS parameter of the second QoS flow comprises at least one of a second GFBR, a second MFBR, or a second MDBV of the second QoS flow.

12. The method according to claim 10 or 11, wherein the second periodicity information of the service of the terminal device comprises at least one of information about a second frame rate of the service or information about a second ratio of frames of high importance to frames of low importance in the service.

13. The method according to any one of claims 1 to 4, wherein the method further comprises:
receiving, by the terminal device, a message that is of the first network device and that comprises information about the first inactivity duration of the first session.

14. The method according to claim 13, wherein the method further comprises:
when duration in which there is no data transmission on the first session reaches the first inactivity duration of the first session, deactivating, by the terminal device, the user plane connection of the first session.

15. The method according to claim 13, wherein the method further comprises:
when duration in which there is no data transmission on the first session reaches the first inactivity duration of the first session, sending, by the terminal device to the first network device, a message indicating that the first session is inactive and/or requesting to deactivate the user plane connection of the first session; and
receiving, by the terminal device from a second network device, a message indicating to deactivate the user plane connection of the first session.

16. A session management method, comprising:
receiving, by a first network device, a first message from a terminal device, wherein the first message comprises a first parameter, and the first parameter is used by the first network device to determine first inactivity duration of a first quality of service QoS flow of the terminal device, or is used by the first network device to determine first inactivity duration of a first session of the terminal device; and
determining, by the first network device, the first inactivity duration of the first QoS flow or the first inactivity duration of the first session based on the first parameter.

17. The method according to claim 16, wherein
the first inactivity duration of the first QoS flow is used to determine to release the first QoS flow; or
the first inactivity duration of the first session is used to determine to release a user plane connection of the first session.

18. The method according to claim 16 or 17, wherein
the first parameter is first periodicity information of a service of the terminal device; or
the first parameter is second inactivity duration of the first QoS flow or second inactivity duration of the first session that is determined based on first periodicity information of a service of the terminal device.

19. The method according to claim 18, wherein the first periodicity information of the service of the terminal device comprises at least one of information about a first frame rate of the service or information about a first ratio of frames of high importance to frames of low importance in the service.

20. The method according to any one of claims 16 to 19, wherein the method further comprises:
sending, by the first network device to the terminal device and/or a second network device and/or a third network device, a message comprising information about the first inactivity duration of the first QoS flow.

21. The method according to claim 20, wherein the method further comprises:
receiving, by the first network device from the terminal device and/or the second network device and/or the third network device, a message indicating that the first QoS flow is inactive and/or requesting to release the first QoS flow; and
sending, by the first network device to the terminal device and/or the second network device and/or the third network device, a message indicating to release the first QoS flow.

22. The method according to any one of claims 16 to 21, wherein the method further comprises:
receiving, by the first network device, a second message from the terminal device, wherein
the second message comprises a second parameter, the second parameter is used by the first network device to determine a first QoS parameter of the first QoS flow, and the first QoS parameter of the first QoS flow comprises at least one of a first guaranteed flow bit rate GFBR, a first maximum flow bit rate MFBR, or a first maximum data burst volume MDBV of the first QoS flow; or
the second message comprises a third parameter, the third parameter is used by the first network device to determine a first QoS parameter of the first QoS flow and a first QoS parameter of a second QoS flow, the first QoS parameter of the first QoS flow comprises at least one of a first GFBR, a first MFBR, or a first MDBV of the first QoS flow, and the first QoS parameter of the second QoS flow comprises at least one of a first GFBR, a first MFBR, or a first MDBV of the second QoS flow.

23. The method according to claim 22, wherein the second parameter or the third parameter is second periodicity information of the service of the terminal device.

24. The method according to claim 22, wherein
the second parameter is a second QoS parameter of the first QoS flow, the second QoS parameter of the first QoS flow is determined by the terminal device based on the second periodicity information of the service of the terminal device, and the second QoS parameter of the first QoS flow comprises at least one of a second GFBR, a second MFBR, or a second MDBV of the first QoS flow; or
the third parameter is information about a second QoS parameter of the first QoS flow and a second QoS parameter of the second QoS flow, the second QoS parameter of the first QoS flow and the second QoS parameter of the second QoS flow are determined by the terminal device based on the second periodicity information of the service of the terminal device, the second QoS parameter of the first QoS flow comprises at least one of a second GFBR, a second MFBR, or a second MDBV of the first QoS flow, and the second QoS parameter of the second QoS flow comprises at least one of a second GFBR, a second MFBR, or a second MDBV of the second QoS flow.

25. The method according to claim 23 or 24, wherein the second periodicity information of the service of the terminal device comprises at least one of information about a second frame rate of the service or information about a second ratio of frames of high importance to frames of low importance in the service.

26. The method according to any one of claims 16 to 19, wherein the method further comprises:
sending, by the first network device to the terminal device, a message comprising information about the first inactivity duration of the first session.

27. The method according to claim 26, wherein the method comprises:
receiving, by the first network device from the terminal device, a message indicating that the first session is inactive and/or requesting to deactivate the user plane connection of the first session; and
sending, by the first network device to the second network device and/or the third network device, a message indicating to deactivate the user plane connection of the first session.

28. The method according to any one of claims 16 to 27, wherein the method further comprises:
receiving, by the second network device from the first network device, the message comprising the information about the first inactivity duration of the first QoS flow.

29. The method according to claim 28, wherein the method comprises:
when duration in which there is no data transmission on the first QoS flow reaches the first inactivity duration of the first QoS flow, sending, by the second network device to the first network device, a message indicating that the first QoS flow is inactive and/or requesting to release the first QoS flow; and
receiving, by the second network device from the first network device, a message indicating to release the first QoS flow.

30. The method according to claim 29, wherein the releasing, by the second network device, the first QoS flow comprises:
deleting, by the second network device, an association relationship between the first QoS flow and the second QoS flow, wherein the first QoS flow is used to transmit data of high importance in the service, the second QoS flow is used to transmit data of low importance in the service, and there is the association relationship between the first QoS flow and the second QoS flow; or
releasing, by the second network device, the second QoS flow associated with the first QoS flow, wherein the first QoS flow is used to transmit data of high importance in the service, and the second QoS flow is used to transmit data of low importance in the service.

31. The method according to any one of claims 16 to 30, wherein the method further comprises:
receiving, by the second network device from the first network device, the message indicating to deactivate the user plane connection of the first session; and
sending, by the second network device to the terminal device, the message indicating to deactivate the user plane connection of the first session.

32. The method according to any one of claims 16 to 31, wherein the method further comprises:
receiving, by the third network device from the first network device, the message comprising the information about the first inactivity duration of the first QoS flow.

33. The method according to claim 32, wherein the method further comprises:
when the duration in which there is no data transmission on the first QoS flow reaches the first inactivity duration of the first QoS flow, sending, by the third network device to the first network device, the message indicating that the first QoS flow is inactive and/or requesting to release the first QoS flow; and
receiving, by the third network device from the first network device, the message indicating to release the first QoS flow.

34. The method according to claim 33, wherein the releasing, by the third network device, the first QoS flow comprises:
deleting, by the third network device, the association relationship between the first QoS flow and the second QoS flow, wherein the first QoS flow is used to transmit the data of high importance in the service, the second QoS flow is used to transmit the data of low importance in the service, and there is the association relationship between the first QoS flow and the second QoS flow; or
releasing, by the third network device, the second QoS flow associated with the first QoS flow, wherein the first QoS flow is used to transmit the data of high importance in the service, and the second QoS flow is used to transmit the data of low importance in the service.

35. The method according to any one of claims 16 to 34, wherein the method further comprises:
receiving, by the third network device from the first network device, the message indicating to deactivate the user plane connection of the first session.

36. A session management method, comprising:
sending, by a terminal device, a second message to a first network device, wherein
the second message comprises a second parameter, the second parameter is used by the first network device to determine a first QoS parameter of a first QoS flow, and the first QoS parameter of the first QoS flow comprises at least one of a first guaranteed flow bit rate GFBR, a first maximum flow bit rate MFBR, or a first maximum data burst volume MDBV of the first QoS flow; or
the second message comprises a third parameter, the third parameter is used by the first network device to determine a first QoS parameter of a first QoS flow and a first QoS parameter of a second QoS flow, the first QoS parameter of the first QoS flow comprises at least one of a first GFBR, a first MFBR, or a first MDBV of the first QoS flow, and the first QoS parameter of the second QoS flow comprises at least one of a first GFBR, a first MFBR, or a first MDBV of the second QoS flow.

37. The method according to claim 36, wherein the second parameter or the third parameter is second periodicity information of a service of the terminal device.

38. The method according to claim 36, wherein the method comprises:
determining, by the terminal device, a second QoS parameter of the first QoS flow based on second periodicity information of a service of the terminal device, wherein the second QoS parameter of the first QoS flow is the second parameter, and the second QoS parameter of the first QoS flow comprises at least one of a second GFBR, a second MFBR, or a second MDBV of the first QoS flow; or
determining, by the terminal device, a second QoS parameter of the first QoS flow and a second QoS parameter of the second QoS flow based on second periodicity information of a service of the terminal device, wherein information about the second QoS parameter of the first QoS flow and the second QoS parameter of the second QoS flow are the third parameter, the second QoS parameter of the first QoS flow comprises at least one of a second GFBR, a second MFBR, or a second MDBV of the first QoS flow, and the second QoS parameter of the second QoS flow comprises at least one of a second GFBR, a second MFBR, or a second MDBV of the second QoS flow.

39. The method according to claim 37 or 38, wherein the second periodicity information of the service of the terminal device comprises at least one of information about a second frame rate of the service or information about a second ratio of frames of high importance to frames of low importance in the service.

40. A session management method, comprising:
receiving, by a first network device, a second message from a terminal device, wherein
the second message comprises a second parameter, the second parameter is used by the first network device to determine a first QoS parameter of a first QoS flow, and the first QoS parameter of the first QoS flow comprises at least one of a first guaranteed flow bit rate GFBR, a first maximum flow bit rate MFBR, or a first maximum data burst volume MDBV of the first QoS flow; or
the second message comprises a third parameter, the third parameter is used by the first network device to determine a first QoS parameter of a first QoS flow and a first QoS parameter of a second QoS flow, the first QoS parameter of the first QoS flow comprises at least one of a first GFBR, a first MFBR, or a first MDBV of the first QoS flow, and the first QoS parameter of the second QoS flow comprises at least one of a first GFBR, a first MFBR, or a first MDBV of the second QoS flow.

41. The method according to claim 40, wherein the second parameter or the third parameter is second periodicity information of a service of the terminal device.

42. The method according to claim 40, wherein the method further comprises:
the second parameter is a second QoS parameter of the first QoS flow, the second QoS parameter of the first QoS flow is determined by the terminal device based on second periodicity information of a service of the terminal device, and the second QoS parameter of the first QoS flow comprises at least one of a second GFBR, a second MFBR, or a second MDBV of the first QoS flow; or
the third parameter is information about a second QoS parameter of the first QoS flow and a second QoS parameter of the second QoS flow, the second QoS parameter of the first QoS flow and the second QoS parameter of the second QoS flow are determined by the terminal device based on the second periodicity information of the service of the terminal device, the second QoS parameter of the first QoS flow comprises at least one of a second GFBR, a second MFBR, or a second MDBV of the first QoS flow, and the second QoS parameter of the second QoS flow comprises at least one of a second GFBR, a second MFBR, or a second MDBV of the second QoS flow.

43. The method according to claim 41 or 42, wherein the second periodicity information of the service of the terminal device comprises at least one of information about a second frame rate of the service or information about a second ratio of frames of high importance to frames of low importance in the service.

44. A communication apparatus, comprising:
a storage unit, configured to store computer instructions; and
a processing unit, configured to execute the computer instructions stored in the storage unit, to enable the communication apparatus to perform the method according to any one of claims 1 to 15, claims 16 to 35, claims 36 to 39, or claims 40 to 43.

45. A communication apparatus, comprising:
a memory, configured to store computer instructions; and
a processor, configured to execute the computer instruction stored in the memory, to enable the communication apparatus to perform the method according to any one of claims 1 to 15, claims 16 to 35, claims 36 to 39, or claims 40 to 43.

46. A computer-readable storage medium, wherein the computer-readable storage medium stores a computer program, and when the computer program is executed by a communication apparatus, the communication apparatus is enabled to perform the method according to any one of claims 1 to 15, claims 16 to 35, claims 36 to 39, or claims 40 to 43.

47. A computer program product, wherein the computer program product comprises the method according to any one of claims 1 to 15, claims 16 to 35, claims 36 to 39, or claims 40 to 43.

48. A chip, wherein the chip comprises a processor and a data interface, and the processor reads, through the data interface, instructions stored in a memory, to perform the method according to any one of claims 1 to 15, claims 16 to 35, claims 36 to 39, or claims 40 to 43.
